# EUROPEAN PATENT APPLICATION

(11) **EP 0 903 940 A1**
(43) Date of publication of application: **24.03.1999**
(21) Application number: 97924301.1
(22) Date of filing: 03.06.1997
(51) Int. Cl.: H04N 5/92, G11B 20/10

(54) **RECORDING AND REPRODUCING DEVICE**

(30) Priority: 04.06.1996 JP 141403/96; 01.08.1996 JP 203371/96; 07.08.1996 JP 208299/96; 21.03.1997 JP 67653/97
(71) Applicant: MATSUSHITA ELECTRIC INDUSTRIAL CO., LTD, Kadoma-shi, Osaka 571-0000 (JP)
(72) Inventor: YAMADA, Masazumi, Osaka 570 (JP); IKETANI, Akira, Higashiosaka-shi, Osaka 577 (JP); KITAMURA, Yoshinori, Osaka 569 (JP); MIZUKAWA, Yousuke, Osaka 576 (JP); KURANO, Yukio, Osaka 579 (JP); JURI, Tatsuro, Osaka 534 (JP); MATSUMI, Chiyoko, Osaka 565 (JP)
(74) Representative: Grünecker, Kinkeldey, Stockmair & Schwanhäusser Anwaltssozietät
(86) International application number: JP9701877
(87) International publication number: WO9747133

(57) **Abstract**

In a recording/reproducing apparatus which records and reproduces a digital video and audio coded signal of a predetermined format on a recording medium in the unit of a predetermined record packet, and in which, in the digital video and audio coded signal, a code word of a DC component of each small block constituting a screen exists at a fixed position in a record packet,
an end-of-block code is added into a region where a code word of the small block is to be recorded, the end-of-block code indicating the end of the code word of the small block, a portion of the region where the code word of the small block is to be recorded is set as a general-purpose data recording region, the portion being behind the end-of-block code, and an input data is allocated into the general-purpose data recording region.

## Description

### Technical Field

The present invention relates to a recording/reproducing apparatus which records and reproduces an image, a sound, and computer data on and from a recording medium such as a magnetic tape.

### Background Art

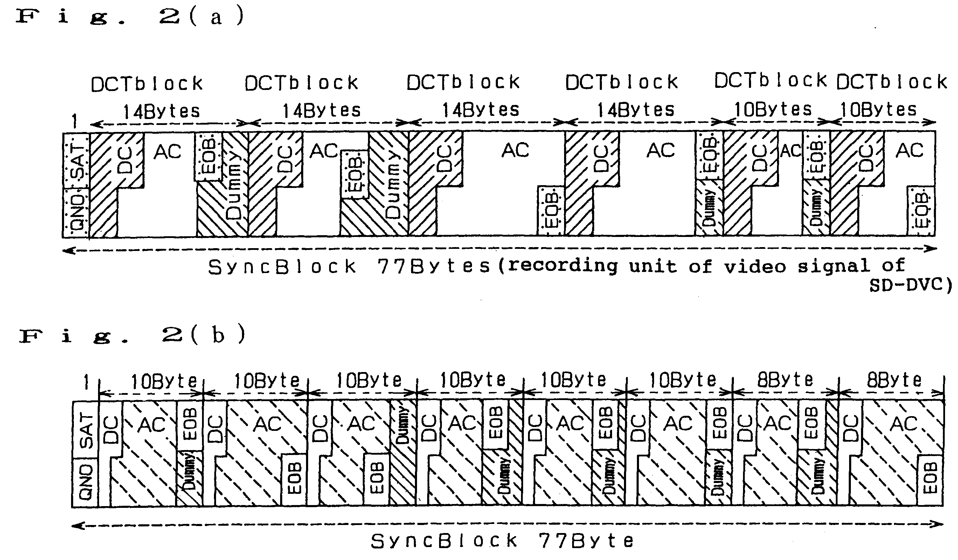

At present, as a medium which stores multimedia information including an image and a sound, known is a DVC (Digital Video Cassette) using a magnetic tape. It is studied to connect the DVC to a computer so that the DVC is used as a storage medium for a computer in the same manner as a hard disk and a floppy disk which are currently used. A currently-used recording cassette for a DVC incorporates a memory which is called an MIC (Memory In Cassette). Cassette and tape management information such as an identification number of a recording cassette (cassette ID), and the length of the tape in the cassette is recorded in MIC. The type of a video signal recorded in an auxiliary recording region of the tape, and the like are recorded in the MIC. A video packet has a format shown in Fig. 2.

A packet accommodates DCT (Discrete Cosine Transform) code data of six small blocks. A DC component is disposed at a fixed position such as shown in Fig. 2(a). In the case of a data corresponding to a mode of a low rate or 12.5 Mbps, the data is disposed at a fixed position such as shown in Fig. 2(b).

A currently-used digital VTR can record only a video signal and an audio signal which are of a predetermined format. Among recording media, for example, an 8-mm tape and a DAT tape have a special streamer format for recording PC file data. However, a tape on which recording has been conducted in the streamer mode is different in format from an 8-mm tape, a DAT tape, and the like which are currently used. Therefore, such a system has a defect that there arise problems such as that, when such a tape on which recording has been conducted in the streamer mode is mounted onto an 8-mm or DAT deck, the tape is erroneously recognized and noises are generated.

Furthermore, functions which are available in, for example, a hard disk connected to a PC, such as a function of performing an access in the unit of a file are not provided. Therefore, it is difficult to easily know the contents of a file or to rapidly access to a position of contents which are to be seen.

An MIC records only cassette and tape management information, such as a cassette ID and the type of a video signal. In other words, in the case where a DVC is used as a file streamer for a computer, an MIC is not used for recording management information of each recorded file.

There is a problem in that, when data in a cassette are once changed on another PC/deck and the cassette is then returned to a PC/deck which is usually used, correspondence relationships among management information in the PC/deck and actual data contents in the cassette are broken.

In a process of transmission or recording, data such as video and audio data having a data format in which the number of copying operations is to be limited are recorded and reproduced or transmitted. In this case, copy control information which is currently considered is added to each of data sectors and record packets. Although the data amount of copy control information which is added to one sector or packet is small, therefore, the data amount which is required for copy control information in the whole process of recording and reproduction or transmission is large, with the result that the transmission bandwidth and the recording capacity are inefficiently used.

### Disclosure of Invention

It is an object of the invention to solve the above-discussed problems to enable functions of, by using a format of a currently-used digital VTR, accessing in the unit of a file and recording a data file other than a video signal and an audio signal of a predetermined format of a digital VTR.

Also, a tape on which a data file is recorded is enabled to be seen on a currently-used digital VTR deck without problems.

It is an object of the invention to provide a recording/reproducing apparatus and a transmission apparatus which can perform copyright management such as inhibition of copy while suppressing increase of the data amount.

In order to solve the problems, the first invention is a recording/reproducing apparatus which records and reproduces a digital video and audio coded signal of a predetermined format on a recording medium in the unit of a predetermined record packet, and in which, in the digital video and audio coded signal, a code word of a DC component of each small block constituting a screen exists at a fixed position in a record packet, wherein
an end-of-block code is added into a region where a code word of the small block is to be recorded, a portion of the region where the code word of the small block is to be recorded is set as a general-purpose data recording region, the portion being behind the end-of-block code, and an input data is recorded into the general-purpose data recording region.

The second invention is a recording/reproducing apparatus which records and reproduces a digital video and audio coded signal of a predetermined format on a recording medium in the unit of a predetermined record packet, and in which, in the digital video and audio coded signal, a DC component of each small block constituting a screen, class information defining a quantization method of the small block, and motion information relating to a movement of the small block from a previous screen respectively exist at fixed positions in a record packet, wherein
a portion in a region to which a code word of the small block is allocated, the portion being behind an end-of-block code, a region where class information is to be recorded, and a region where motion information is to be recorded are set as a general-purpose data recording region, and an input data is allocated into the general-purpose data recording region.

The third invention is a conversion method of converting an input data into a format of a digital video and audio coded signal, in the unit of a predetermined record packet, in which a code word of a DC component of each small block constituting a screen exists at a fixed position in the record packet, wherein
an end-of-block code is added into a region where a code word of the small block is to be disposed, a portion of the region where the code word of the small block is to be disposed is set as a general-purpose data disposing region, the portion being behind the end-of-block code, and the data is disposed in the general-purpose data disposing region and converted.

The fourth invention is a conversion method of converting an input data into a format of a digital video and audio coded signal, in the unit of a predetermined transmission packet, in which a DC component of each small block constituting a screen, class information, and motion information respectively exist at fixed positions in the transmission packet, wherein
a portion in a region to which a code word of the small block is disposed, the portion being behind the end-of-block code, a region where class information is to be recorded, and a region where motion information is to be recorded are set as a general-purpose data disposing region, and the data is disposed in the general-purpose data disposing region and converted.

According to the invention, by using characteristics that the position of a code word of a DC component indicating the starting position of each small block is fixed, and that, when an end-of-block code is added, a region from the added position to the starting position of the next small block becomes a data region which is ineffective for decoding and reproduction in a currently-used digital VTR, it is possible to record a data file other than a video and audio coded signal of the predetermined format. Furthermore, data on a recording medium are identical with transmission and record formats of the recording medium. A data file portion is judged as an ineffective data region, and skipped by a reproducing/decoding device of the currently-used digital VTR deck. Therefore, the tape on which a data file is recorded can be seen also on a currently-used digital VTR deck without problems. In the case of recording a data file other than a video and audio coded signal of the predetermined format, it is not required to use regions for class information and motion information in addition to the end-of-block code. Therefore, also the regions can be used for recording the data file.

The fifth invention is a conversion method in which a digital video and audio coded signal in the unit of a predetermined record packet is received, a code word of a DC component of each small block constituting a screen respectively existing at a fixed position in the record packet, wherein
a data is output from a portion in a region into which a code word of the small block in the input signal is disposed, the portion being behind an end-of-block code.

The sixth invention is a conversion method in which a digital video and audio coded signal in the unit of a predetermined transmission packet is received, the signal having a format in which a code word of a DC component of each small block constituting a screen, class information, and motion information respectively exist at fixed positions in the transmission packet, wherein
a data is output from a portion in a region into which a code word of the small block in the input signal is disposed, the portion being behind an end-of-block code, a region where class information is to be recorded, and a region where motion information is to be recorded.

According to the fifth invention, by using characteristics that the position of a code word of a DC component indicating the starting position of each small block is fixed, and that, when an end-of-block code is added, a region from the added position to the starting position of the next small block becomes a data region which is ineffective for decoding and reproduction in a currently-used digital VTR, it is possible to output a data file from a reproduced signal from a recording medium on which the data file other than a video and audio coded signal of the predetermined format is recorded by the first or third invention.

In the sixth invention, with respect to a signal obtained by the second or fourth invention, a data file can be reproduced by using regions for class information and motion information in addition to the end-of-block code.

The seventh invention is a recording/reproducing apparatus which records and reproduces a digital video and audio coded signal of a predetermined format in the unit of a predetermined record packet, and
in which, in the digital video and audio coded signal, a code word of a DC component of each small block constituting a screen exists at a fixed position in the record packet, wherein
an end-of-block code is disposed in a region which is in a predetermined track and to which a code word of the small block is allocated, a portion of the region to which a code word of the small block is allocated is set as a file management information recording region, the portion being behind the end-of-block code, and file management information which is information relating to a file recorded in a recording medium is allocated into the file management information recording region.

The eighth invention is a recording/reproducing apparatus which records and reproduces a digital video and audio coded signal of a predetermined format in the unit of a predetermined record packet, and
in which, in the digital video and audio coded signal, a DC component of each small block constituting a screen, class information, and motion information respectively exist at fixed positions in a record packet, wherein
a portion in a region to which a code word of the small block is allocated, the portion being behind an end-of-block code, a region where class information is to be recorded, and a region where motion information is to be recorded are set as a file management information recording region, and file management information is allocated into the file management information recording region.

The ninth invention is a conversion method of converting an input data into a format of a digital video and audio coded signal, in the unit of a predetermined transmission packet, in which a code word of a DC component of each small block constituting a screen exists at a fixed position in the transmission packet, wherein
an end-of-block code is added into a region where a code word of the small block is to be disposed, a portion of the region where the code word of the small block is to be disposed is set as a file management information region, the portion being behind the end-of-block code, and file management information relating to the data is disposed in the file management information region and converted.

The tenth invention is a conversion method of converting an input data into a format of a digital video and audio coded signal, in the unit of a predetermined transmission packet, in which a DC component of each small block constituting a screen, class information, and motion information respectively exist at fixed positions in the transmission packet, wherein
a portion of a region where a code word of the small block is to be disposed, the portion being behind the end-of-block code, a region where class information is to be recorded, and a region where motion information is to be recorded are set as a file management information region, and file management information relating to the data is disposed in the file management information region and converted.

The eleventh invention is a conversion method of converting an input data into a format of a digital video and audio coded signal, in the unit of a predetermined transmission packet, in which a code word of a DC component of each small block constituting a screen exists at a fixed position in the transmission packet, wherein
an end-of-block code is added into a region where a code word of the small block is to be disposed, a portion of the region where the code word of the small block is to be disposed is set as a file management information region, the portion being behind the end-of-block code, and file management information relating to the data is disposed in the file management information region and converted.

The twelfth invention is a conversion method in which a digital video and audio coded signal in the unit of a predetermined transmission packet is received, in which a code word of a DC component of each small block constituting a screen exists at a fixed position in the transmission packet, wherein
file management information is output from a portion in a region into which the code word of the small block in the input signal is disposed, the portion being behind an end-of-block code.

The thirteenth invention is a conversion method in which a digital video and audio coded signal in the unit of a predetermined transmission packet is received, in which a DC component of each small block constituting a screen, class information, and motion information respectively exist at fixed positions in a record packet, wherein
file management information is output from a portion in a region into which the code word of the small block in the input signal is disposed, the portion being behind an end-of-block code, a region where class information is to be recorded, and a region where motion information is to be recorded.

According to the invention, a region is set in the same manner as a region which is disposed for recording a data file, and management information of each file, such as the name of the file, the time and date of updation of the file, information of the file start position, the file size, information of the file end position, or information of the number of tracks is recorded. In a process of reproduction, therefore, it is possible to realize functions such as an access in the unit of a file which can be performed in a hard disk connected to a PC. Consequently, the contents of data in a recording medium can be easily known, and a rapid access to the position of contents which are to be seen is enabled.

The file is not restricted to data files. When the file start position, the file end position, or the number of tracks is decided as a one file unit, and the file name, the time and date of updation, and the like are added to data of a currently-used digital VTR, the data can be handled in the same manner as a data file.

The fourteenth invention comprises data recording means for recording file management information which is information for managing a file to be recorded into a recording medium other than a recording medium (a magnetic tape), to the magnetic tape recording medium.

According to the invention, also management information of each file which is to be recorded on a tape can be recorded into an MIC which is conventionally used only for recording management information of a tape and a cassette. Therefore, an access to a file recorded on a tape is facilitated as compared with the prior art.

The fifteenth invention is a recording/reproducing method in which; on an individualizing information storage medium (an MIC) added to a recording medium (a magnetic tape), individualizing information for distinguishing the tape from other tapes is stored; content information relating to data contents on the tape is stored in content information storing means (a hard disk on a PC/deck); during a process of reproducing the tape, the content information of the tape identified by the individualizing information is acquired; and data on the tape are reproduced on the basis of the acquired content information.

The sixteenth invention is a recording/reproducing method in which; on an MIC added to a tape, individualizing information for distinguishing the tape from other tapes, and data updation information which is information relating to a time and date of updation of data on the tape are stored; content information relating to data contents on the tape and content information updation information relating to a time and date of updation of content information are stored in content information storing means (a hard disk on a PC/deck) disposed in a recording/reproducing apparatus which can reproduce the tape; if, during a process of reproducing the tape, the time and date indicated by the content information updation information is identical with or newer than the time and date indicated by the data updation information, the content information of the tape identified by the individualizing information storing means is acquired; and data on the tape are reproduced on the basis of the acquired content information.

The seventeenth invention is a recording/reproducing method in which; on an individualizing information storage medium added to a detachable recording medium, individualizing information which is information for distinguishing the recording medium from other recording media of a same type, and data updation information which is information relating to a data on the recording medium are stored; recording medium content information which is information relating to data contents in the recording medium, and recording medium content information updation information which is information relating to a time and date of updation of content information are stored at a predetermined position on the recording medium; content information which is information relating to data contents in the recording medium, and content information updation information which is information relating to a time and date of updation of content information are stored into content information storing means disposed in a recording/reproducing apparatus which can reproduce the recording medium; if, during a process of reproducing the recording medium, the time and date indicated by the content information updation information is identical with or newer than the time and date indicated by the data updation information, the content information of the recording medium identified by the individualizing information storing means is acquired; if the time and date indicated by the content information updation information is older than the time and date indicated by the data updation information, and the time and date indicated by the recording medium content information updation information is identical with or newer than the time and date indicated by the data updation information, the recording medium content information is acquired, and the content information and updation time and date information are updated on the basis of the recording medium content information; and data in the recording medium are reproduced on the basis of the acquired content information.

The eighteenth invention is a recording/reproducing method in which, also when information relating to contents is to be acquired from recording medium content information on a recording medium, and also when information relating to contents is to be acquired from content information on a content information recording means, information relating to contents is displayed to a user by a common method.

According to the invention, an MIC, a management information track, and management information on an HDD are always matched to one other unless writing is performed on a tape by using another PC. At the timing when a tape is mounted, therefore, a file can be immediately accessed by using only management information on the HDD and without reading the management information track.

The nineteenth invention is a recording method in which copy control information which is to be added to each sector of a data to be recorded is separately extracted and judged, typical-copy control information is generated in a predetermined range, and the typical-copy control information is recorded at a predetermined position of a recording medium for recording data from which the copy control information is separated.

The twentieth invention is a transmitting method in which copy control information which is to be added to each sector of a data to be transmitted is separately extracted and judged, typical-copy control information is generated in a predetermined range, and the typical-copy control information is transmitted together with data from which the copy control information is separated (a predetermined position of a transmission packet/other packets/a specific position in the data).

### Brief Description of Drawings

Fig. 1 is a block diagram of the configuration of an apparatus for realizing a data recording method of a first embodiment.
Fig. 2 is a view for realizing a method of recording data to a digital VCR of the prior art.
Fig. 3 is a view for realizing a method of recording data of another format to a digital VCR of the prior art.
Fig. 4 is a block diagram of the configuration of an apparatus for realizing a second embodiment.
Fig. 5 is a block diagram of the configuration of an apparatus for realizing a third embodiment.
Fig. 6 is a view illustrating a recording method on a tape.
Fig. 7 is a block diagram of the configuration of an apparatus for realizing a fourth embodiment.
Fig. 8 is a block diagram of the configuration of an apparatus for realizing a fifth embodiment.
Fig. 9 is a block diagram of the configuration of an apparatus for realizing a sixth embodiment.
Fig. 10 is a block diagram of the configuration of an apparatus for realizing a seventh embodiment.
Fig. 11 is a block diagram of the configuration of an apparatus for realizing an eighth embodiment.
Fig. 12 is a block diagram of the configuration of an apparatus for realizing a ninth embodiment.
Fig. 13 is a block diagram of the configuration of an apparatus for realizing a tenth embodiment.
Fig. 14 is a block diagram of the configuration of an apparatus for realizing an eleventh embodiment.
Fig. 15 is a block diagram of the configuration of an apparatus for realizing a twelfth embodiment.
Fig. 16 is a block diagram of the configuration of an apparatus for realizing a thirteenth embodiment.
Fig. 17 is a block diagram of the configuration of an apparatus for realizing a fourteenth embodiment.
Fig. 18 is a view showing a form of recording data for illustrating a data recording method of the thirteenth embodiment.
Fig. 19 is a block diagram of the configuration of an apparatus for realizing a fifteenth embodiment.
Fig. 20 is a view showing a form of transmitting data for illustrating a data recording method of the fifteenth embodiment.
Fig. 21 is a view showing a form of recording data for illustrating the data recording method of the fifteenth embodiment.

### (Legend of the Reference Numerals)

- 1, 1B:: recording/reproducing apparatus
- 2:: MIC
- 3:: cassette
- 6:: record/reproduction processing circuit
- 5, 15:: interface
- 6:: record/reproduction processing circuit
- 10, 10B:: personal computer (PC)
- 11:: hard disk
- 13:: CPU
- 14:: memory
- 100:: input data judging means
- 101:: DVC data generating means
- 102:: EOB adding means
- 103:: address generating means
- 104:: switch
- 105:: data format converting means
- 106:: auxiliary information generating means
- 108:: data kind code generating means
- 109:: data amount information generating means
- 111:: ineffective data generating means
- 110:: data amount measuring means
- 112:: data amount information generating means
- 200:: input data judging means
- 201:: DVC data generating means
- 202:: EOB adding means
- 203:: address generating means
- 204:: switch
- 205:: data format converting means
- 206:: auxiliary information generating means
- 221:: ineffective data generating means
- 220:: data amount measuring means
- 222:: data amount information generating means
- 312:: data outputting means
- 300:: input data judging means
- 301:: DVC data analyzing means
- 303:: address generating means
- 304:: switch
- 305:: data format converting means
- 306:: auxiliary information generating means
- 307:: data amount information judging means
- 406:: auxiliary information generating means
- 401:: file management information generating means
- 402:: file management information position information generating means
- 500:: input data judging means
- 504:: switch
- 505:: data format converting means
- 506:: auxiliary information judging means
- 507:: controller
- 601:: tape management information fetching means
- 602:: file management information fetching means
- 610:: data inputting means
- 612:: data outputting means
- 615:: external apparatus
- 801:: data recording/reproducing apparatus
- 802:: interface unit
- 803:: recording/reproducing circuit
- 804:: copy control information separator
- 805:: record data processor
- 806:: typical-copy information generator
- 807:: packetizer
- 808:: copy information multiplier
- 809:: controller
- 811:: transmitter/receiver
- 812:: copy information separator
- 813:: copy control information restorer
- 814:: sector restoration processor
- 815:: denotes a copy information multiplier.
- 820:: digital data disk serving as a data outputting apparatus
- 821:: reproducing unit
- 822:: decoding unit
- 823:: interface unit
- 824:: transmitter/receiver
- 825:: copy information multiplier 826, 827: packetizer
- 828:: transmission data processor
- 829:: typical-copy information generator
- 830:: copy information separator

### Best Mode for Carrying Out the Invention

Hereinafter, embodiments of the invention will be described with reference to the following drawings.

### (Embodiment 1)

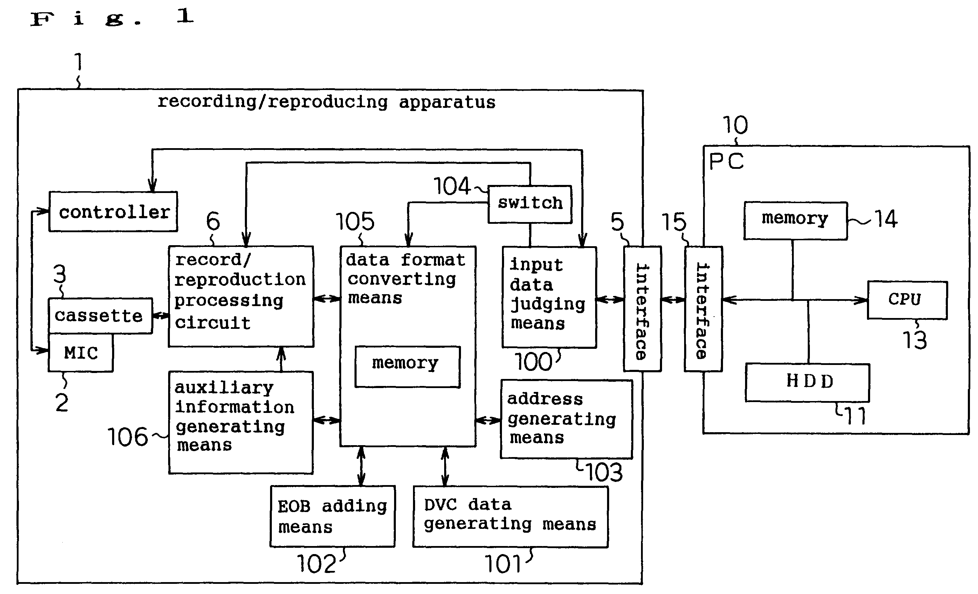

Fig. 1 is a block diagram of an embodiment of the invention. In Fig. 1, 1 denotes a recording/reproducing apparatus, 3 denotes a cassette, 2 denotes an MIC, 6 denotes a record/reproduction processing circuit, 10 denotes a personal computer (PC), 11 denotes a hard disk, 13 denotes a CPU, 14 denotes a memory, 5 and 15 denote interfaces, 100 denotes input data judging means, 101 denotes DVC data generating means, 102 denotes EOB adding means, 103 denotes address generating means, 104 denotes a switch, 105 denotes data format converting means, and 106 denotes auxiliary information generating means. Hereinafter, it is assumed that components denoted by the same reference numeral have the same configuration and function.

Hereinafter, the operation of the thus configured recording/reproducing apparatus will be described.

In the following, description will be made on the case where data files accumulated in the hard disk 11 in the PC 10 are transferred to the recording/reproducing apparatus 1 and recorded.

The input data judging means 100 judges whether data input from the hard disk 11 in the PC 10 are DVC data or not.

The judgment is conducted based on whether an extension of the data name or management information added to the data coincides with a predetermined value or not. In this case, also conditions of the data which are to be output, for example, whether the data correspond to the 25-Mbps mode which is the standard one for a DVC or not, or whether the data correspond to a mode of a low rate or 12.5 Mbps or not is judged by the input data judging means 100. If it is judged as a result of the judgment that the input data are DVC data, the input data are output as they are through the switch 104. In this case, the data are recorded in the format of a DVC packet such as shown in Fig. 2. In this description, a video packet is shown. In the packet, DCT (Discrete Cosine Transform) code data of six small blocks are accommodated. The DC components of the data are disposed at fixed positions such as shown in Fig. 2(a), or, in the case where the data correspond to the low rate or 12.5-Mbps mode, the DC components are disposed at fixed positions such as shown in Fig. 2(b).

In the case where the input data are not DVC data, the data are switched by the switch 104 so as to be input into the data format converting means 105. The DVC data generating means 101 connected to the data format converting means 105 outputs data patterns of packets in a memory, to a buffer in a given sequence. In this case, values which are sequentially changed, such as the track number of the data which is currently output, and the packet numbers are output while being sequentially rewritten by a counter. Also in the case of a data format other than a DVC, by using the input data judging means 100, it is judged on the basis of the data rate and the like whether the data are data which are to be recorded in correspondence with the 25-Mbps mode or not, or whether the data are data which are to be recorded in correspondence with the low-rate mode of 12.5 Mbps or not. In accordance with the judgment, the header of a packet and the value in a specific packet are switched to appropriate ones. The address generating means 103 generates an address to which data of each packet can be allocated.

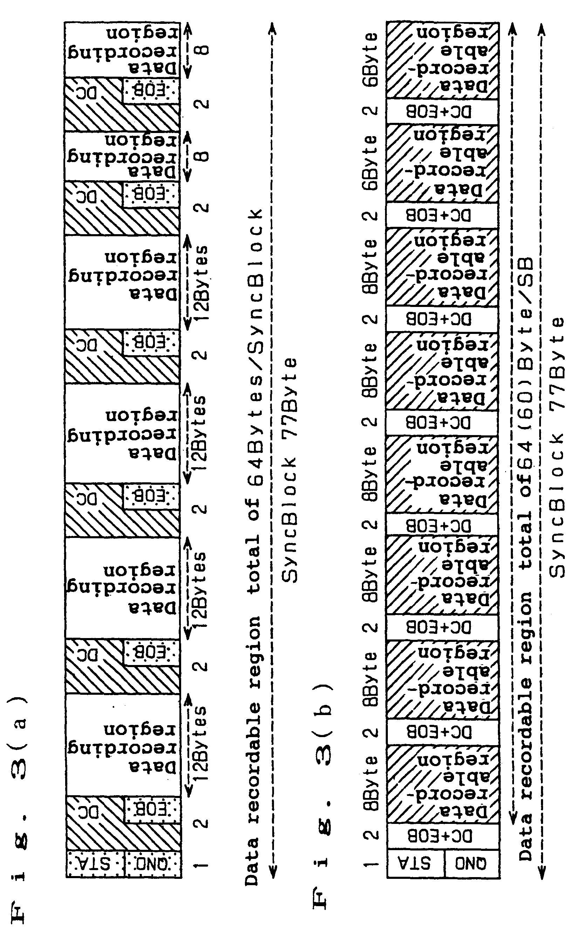

Fig. 3(a) shows a method of recording data other than a DVC into video packets of DVC packets of the 25-Mbps mode. In the same manner as Fig. 2(a), DCT (Discrete Cosine Transform) code data of six small blocks are accommodated in a packet, and the DC components of the data are disposed at fixed positions shown in the figure. The EOB adding means 102 adds to the address generated by the address generating means 103, i.e., the address immediately behind the motion component, class information, and the DC component of the small block, an EOB (End-Of-Block) code which indicates the end of the code word of the small block. As a result of this operation, regions of 12 bytes or 8 bytes from the EOB to the start position of the next small block, i.e., 64 bytes in the whole of one DVC block become data regions which are ineffective for decoding and reproducing currently-existing DVC data. Even when any data is allocated to the regions, the data does not affect an image reproduced from the DVC, and a decoded image which is due to only data of DC components is displayed.

Fig. 3(b) shows a method of recording data other than a DVC into video packets of DVC packets of the 12.5-Mbps mode. In the same manner as Fig. 2(b), DCT (Discrete Cosine Transform) code data of eight small blocks are accommodated in a packet, and the DC components of the data are disposed at fixed positions shown in the figure. The EOB adding means 102 adds to the address generated by the address generating means 103, i.e., the address immediately behind the DC component of the small blocks, an EOB (End-of-Block) code which indicates the end of the code word of the small block. As a result of this operation, the regions of 8 bytes and 6 bytes from the EOB to the start position of the next small block, i.e. 60 bytes in the whole of one DVC block in the same manner as FIG. 3(a) become data regions which are ineffective for decording and reproducing currently exixting DVC data. Furthermore, data are recorded also at positions of recording motion components and class information which are not necessary in data recording other than a DVC. In this case, when a combination of motion information, class information, and a DC component is a special one, the block is judged to be ineffective. Therefore, the data format converting means 105 judges whether a combination pattern of the input data and the bits of the DC component coincides with the special pattern or not, and, if the patterns coincide with each other, converts the ninth bit of the DC component.

As a result of this operation, the regions of 8 bytes or 6 bytes from the EOB to the start position of the next small block, and a further 4-bit region of motion information and class information and the ninth bit of the DC component for each small block, i.e., 64 bytes in the whole of one DVC block in the same manner as Fig. 3(a) become data regions which are ineffective for decoding and reproducing currently-existing DVC data. Even when any data is allocated to the regions, the data does not affect an image reproduced from the DVC, and a decoded image which is due to only data of DC components is displayed.

The data which have undergone the above-mentioned conversion are recorded into the cassette by the record/reproduction processing circuit 6.

In order to enhance the error tolerance, a process such as double writing of data may be performed. In this case, the data rate is reduced to 1/2.

### (Embodiment 2)

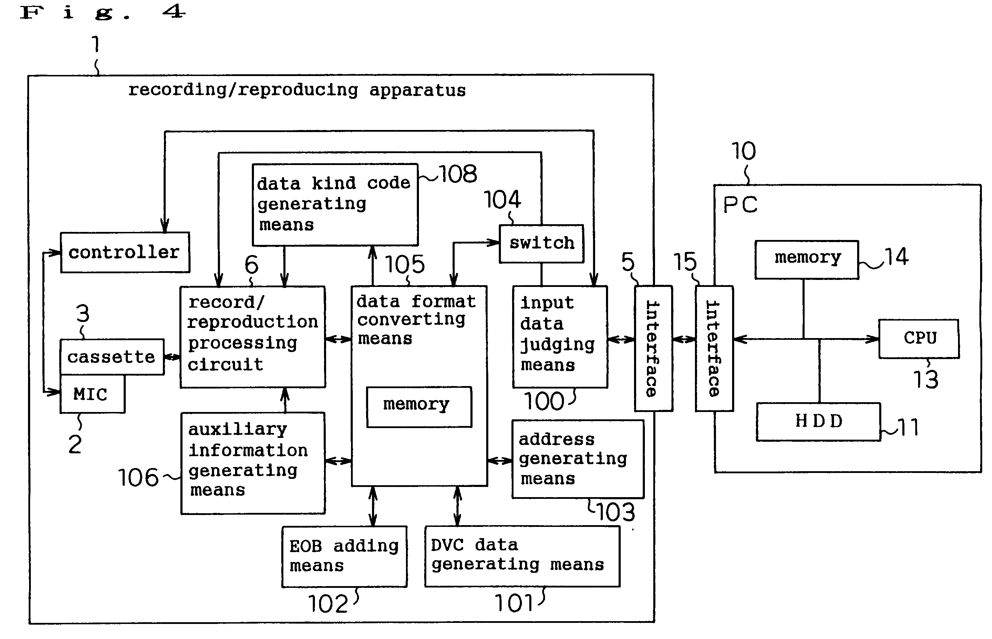

Fig. 4 is a block diagram of Embodiment 2 of the invention. In Fig. 4, 1 denotes a recording/reproducing apparatus, 3 denotes a cassette, 2 denotes an MIC, 6 denotes a record/reproduction processing circuit, 10 denotes a personal computer (PC), 11 denotes a hard disk, 13 denotes a CPU, 14 denotes a memory, 5 and 15 denote interfaces, 100 denotes input data judging means, 101 denotes DVC data generating means, 102 denotes EOB adding means, 103 denotes address generating means, 104 denotes a switch, 105 denotes data format converting means, 106 denotes auxiliary information generating means, and 108 denotes data kind code generating means.

Hereinafter, the operation of the thus configured recording/reproducing apparatus will be described.

In the following, description will be made on the case where data files accumulated in the hard disk 11 in the PC 10 are transferred to the recording/reproducing apparatus 1 and recorded.

The input data judging means 100 judges whether data input from the hard disk 11 in the PC 10 are DVC data or not. If it is judged as a result of the judgment that the input data are DVC data, the input data are output as they are through the switch 104. In this case, the data are recorded in the format of a DVC packet such as shown in Fig. 2. In the case where the input data are not DVC data, the data are switched by the switch 104 so as to be input into the data format converting means 105, and then converted into the format shown in Fig. 3.

The DVC data generating means 101 connected to the data format converting means 105 outputs data patterns of packets in a memory, to a buffer in a given sequence. In this case, values which are sequentially changed, such as the track number of the data which is currently output, and the packet numbers are output while being sequentially rewritten by a counter. The address generating means 103 generates addresses to which data of the packets can be allocated.

In the same manner as the first embodiment, data other than a DVC are recorded into a DVC packet in the format of Fig. 3(a) in the case of the 25-Mbps mode, and in the format of Fig. 3(b) in the case of the 12.5-Mbps mode.

On the basis of an input from the input data judging means 100, the data kind code generating means 108 generates a flag indicating whether the recorded data are those obtained by recording DVC data as they are or not, and a flag indicating which one of the 25-Mbps mode and the 12.5-Mbps mode is used in the recording. The flags are added together with other auxiliary information generated by the auxiliary information generating means 106, to the input data. In the case where the cassette 3 has the MIC 2 serving as an external storage device, the flags are recorded also thereinto.

The data which have undergone the above-mentioned conversion are recorded into the cassette 3 by the record/reproduction processing circuit 6.

As a result of this operation, the embodiment has both the recording function of a currently-used digital VTR deck, and the function of recording data other than digital VTR data. At the same time as the switching, also information indicative of the format in which the recording is performed is recorded. Therefore, it is possible to record both a data file and data of a currently-used digital VTR without problems.

In order to enhance the error tolerance, a process such as double writing of data may be performed. In this case, the data rate is reduced to 1/2.

### (Embodiment 3)

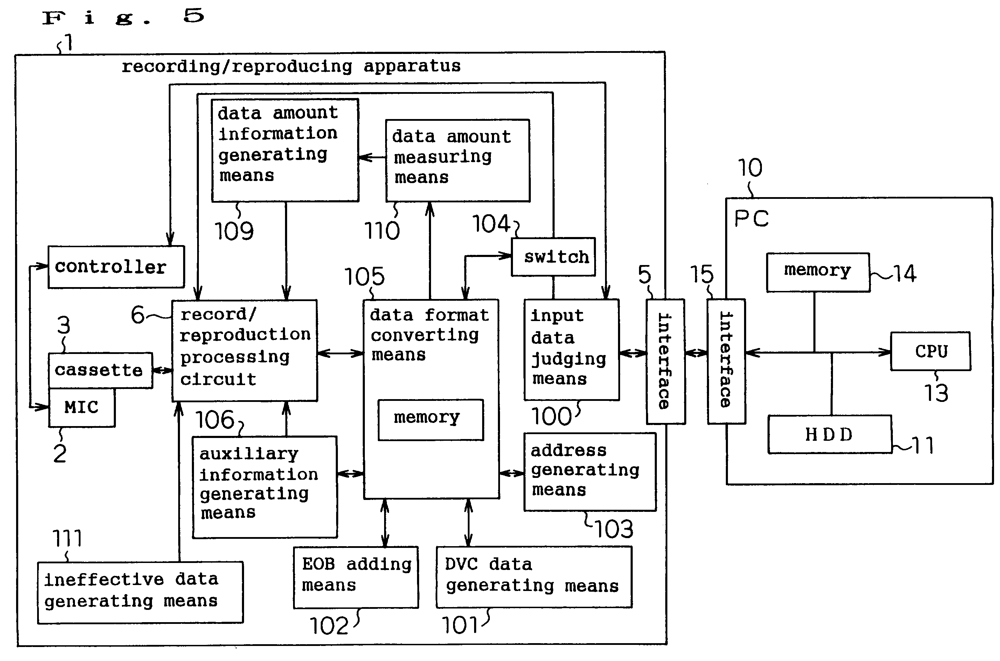

Fig. 5 is a block diagram of Embodiment 3 of the invention. In Fig. 5, 1 denotes a recording/reproducing apparatus, 3 denotes a cassette, 2 denotes an MIC, 6 denotes a record/reproduction processing circuit, 10 denotes a personal computer (PC), 11 denotes a hard disk, 13 denotes a CPU, 14 denotes a memory, 5 and 15 denote interfaces, 100 denotes input data judging means, 101 denotes DVC data generating means, 102 denotes EOB adding means, 103 denotes address generating means, 104 denotes a switch, 105 denotes data format converting means, 106 denotes auxiliary information generating means, 109 denotes data amount information generating means, 111 denotes ineffective data generating means, and 110 denotes data amount measuring means.

Hereinafter, the operation of the thus configured recording/reproducing apparatus will be described.

In the following, description will be made on the case where data files accumulated in the hard disk 11 in the PC are transferred to the recording/reproducing apparatus 1 and recorded.

The input data judging means 100 judges whether data input from the hard disk 11 in the PC 10 are DVC data or not. If it is judged as a result of the judgment that the input data are DVC data, the input data are output as they are through the switch 104. In this case, the data are recorded in the format of a DVC packet such as shown in Fig. 2.

In the case where the input data are not DVC data, the data are switched by the switch 104 so as to be input into the data format converting means 105, and then converted into the format shown in Fig. 3.

The DVC data generating means 101 connected to the data format converting means 105 outputs data patterns of packets in a memory, to a buffer in a given sequence. In this case, values which are sequentially changed, such as the track number of the data which is currently output, and the packet numbers are output while being sequentially rewritten by a counter. The address generating means 103 generates addresses to which data of the packets can be allocated.

In the same manner as the first embodiment, data other than a DVC are recorded into a DVC packet in the format of Fig. 3(a) in the case of the 25-Mbps mode, and in the format of Fig. 3(b) in the case of the 12.5-Mbps mode.

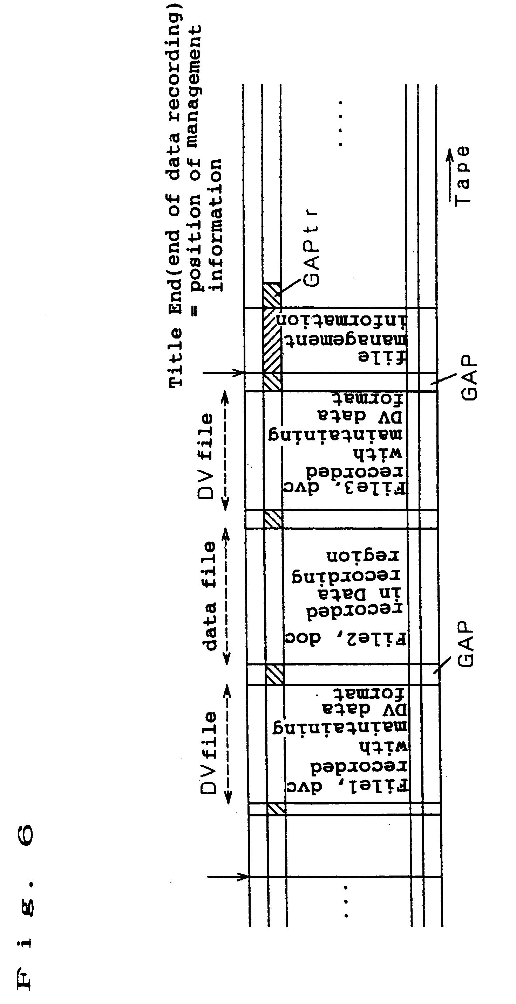

The data which have undergone the above-mentioned conversion are recorded into the cassette 3 by the record/reproduction processing circuit 6. In the embodiment, the data are recorded on a tape in the format such as shown in Fig. 6. In a DVC, the rate of recording data on a tape is constant. When the rate of input data from the PC 10 is variable, therefore, the data must be recorded with adding ineffective data so as to attain a constant record data. The data amount measuring means 110 measures the amount of data which are input during a period corresponding to one track, i.e., 1/299.7 sec. Ineffective data of an amount equal to the difference between the measured data amount and the amount of data to be recorded, in this case, 64 bytes H 128 = 2 kbytes are generated by the ineffective data generating means 111, and then recorded with being added to the input data. The measurement amount of the data amount measuring means 110 is generated as a flag by the data amount information generating means 109 and then recorded with being multiplexed to an input signal. In the case where the cassette 3 has the MIC 2 serving as an external storage device, the flag is recorded also thereinto.

According to the embodiment described above, when the size of an input data file is not an integer multiple of the size of the region where the data recording is enabled, i.e., the data region which is ineffective for decoding and reproduction in a currently-used digital VTR, or when the input data rate is different from the recording rate of a currently-used deck in spite of conversion and recording conducted so as to maintain the real-timeness, the data file is recorded with adding ineffective dummy data. In a reproducing process, the data file can be reproduced while the added ineffective dummy data are removed away.

In order to enhance the error tolerance, a process such as double writing of data may be performed. In this case, the data rate depends on the amount of ineffective dummy data, and is reduced to 1/2 at the worst.

### (Embodiment 4)

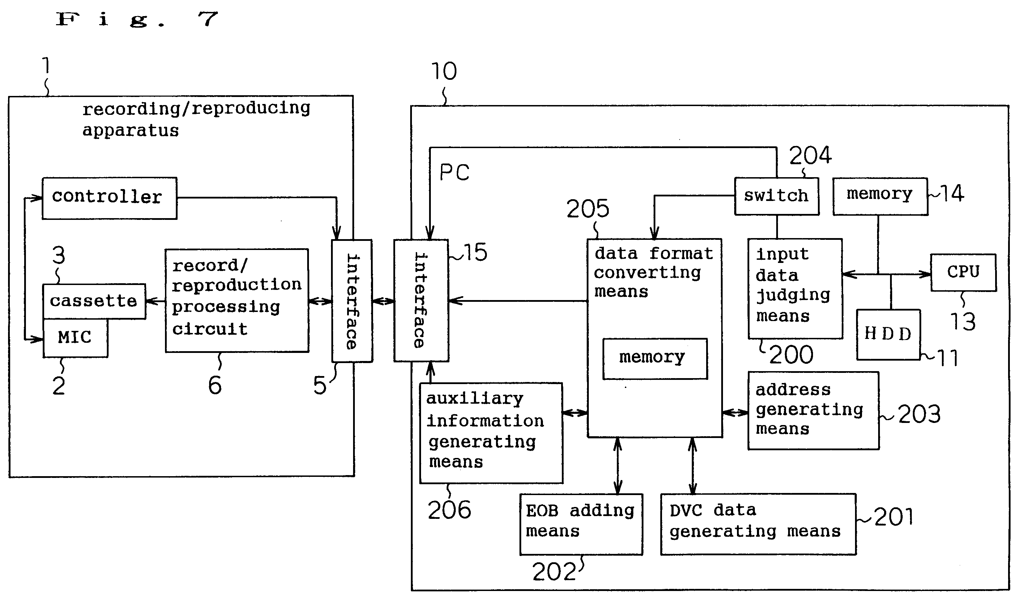

Fig. 7 is a block diagram of Embodiment 4 of the invention. In Fig. 7, 1 denotes a recording/reproducing apparatus, 3 denotes a cassette, 2 denotes an MIC, 6 denotes a record/reproduction processing circuit, 10 denotes a personal computer (PC), 11 denotes a hard disk, 13 denotes a CPU, 14 denotes a memory, 5 and 15 denote interfaces, 200 denotes input data judging means, 201 denotes DVC data generating means, 202 denotes EOB adding means, 203 denotes address generating means, 204 denotes a switch, 205 denotes data format converting means, and 206 denotes auxiliary information generating means.

Hereinafter, the operation of the thus configured PC and the recording/reproducing apparatus connected thereto will be described.

In the following, description will be made on the case where data files accumulated in the hard disk 11 in the PC are converted in the PC 10 and then transferred to the recording/reproducing apparatus 1 and recorded.

The input data judging means 200 judges whether data input from the hard disk 11 in the PC 10 are DVC data or not. If it is judged as a result of the judgment that the input data are DVC data, the input data are output as they are through the switch 204. In this case, the data are recorded in the format of a DVC packet such as shown in Fig. 2.

In the case where the input data are not DVC data, the data are switched by the switch 204 so as to be input into the data format converting means 205, and then converted into the format shown in Fig. 3.

The DVC data generating means 201 connected to the data format converting means 205 outputs data patterns of packets in a memory, to a buffer in a given sequence. In this case, values which are sequentially changed, such as the track number of the data which is currently output, and the packet numbers are output while being sequentially rewritten by a counter. The address generating means 203 generates addresses to which data of the packets can be allocated.

In the same manner as the first embodiment, data other than a DVC are recorded into a DVC packet in the format of Fig. 3(a) in the case of the 25-Mbps mode, and in the format of Fig. 3(b) in the case of the 12.5-Mbps mode.

The data which have undergone the above-mentioned conversion are output to the recording/reproducing apparatus 1, and then recorded into the cassette 3 by the record/reproduction processing circuit 6.

As a result of this operation, a data file is converted into a data format corresponding to the recording function of a currently-used digital VTR deck, thereby allowing the data file to be recorded by the currently-used digital VTR without problems.

In order to enhance the error tolerance, a process such as double writing of data may be performed. In this case, the data rate is reduced to 1/2.

### (Embodiment 5)

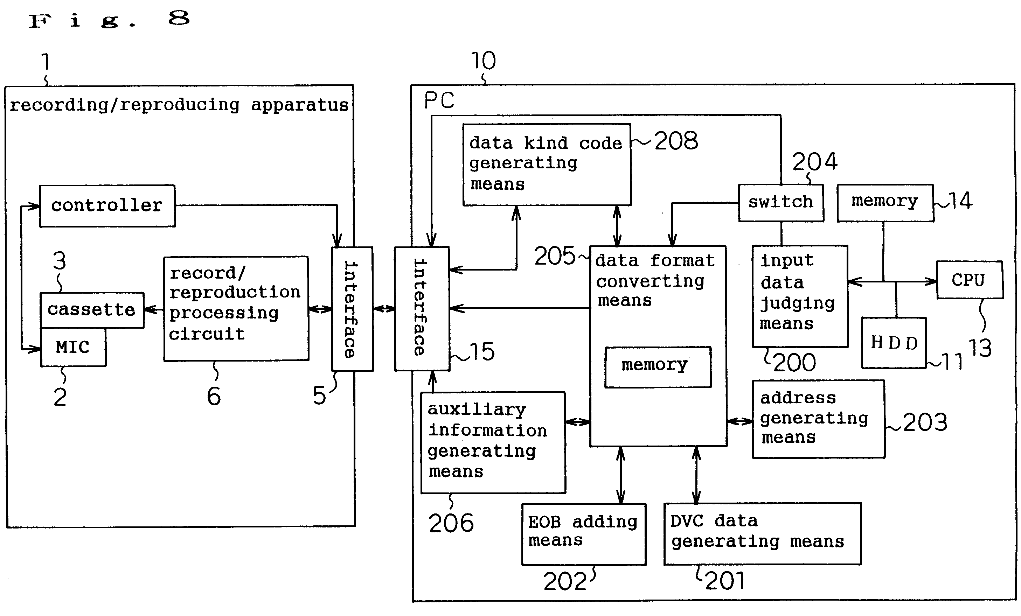

Fig. 8 is a block diagram of Embodiment 5 of the invention. In Fig. 8, 1 denotes a recording/reproducing apparatus, 3 denotes a cassette, 2 denotes an MIC, 6 denotes a record/reproduction processing circuit, 10 denotes a personal computer (PC), 11 denotes a hard disk, 13 denotes a CPU, 14 denotes a memory, 5 and 15 denote interfaces, 200 denotes input data judging means, 201 denotes DVC data generating means, 202 denotes EOB adding means, 203 denotes address generating means, 204 denotes a switch, 205 denotes data format converting means, 206 denotes auxiliary information generating means, and 208 denotes data kind code generating means.

Hereinafter, the operation of the thus configured PC and the recording/reproducing apparatus 1 connected thereto will be described.

In the following, description will be made on the case where data files accumulated in the hard disk 11 in the PC 10 are converted in the PC 10 and then transferred to the recording/reproducing apparatus 1 and recorded.

The input data judging means 200 judges whether data input from the hard disk 11 in the PC 10 are DVC data or not. If it is judged as a result of the judgment that the input data are DVC data, the input data are output as they are through the switch 204. In this case, the data are recorded in the format of a DVC packet such as shown in Fig. 2.

In the case where the input data are not DVC data, the data are switched by the switch 204 so as to be input into the data format converting means 205, and then converted into the format shown in Fig. 3.

The DVC data generating means 201 connected to the data format converting means 205 outputs data patterns of packets in a memory, to a buffer in a given sequence. In this case, values which are sequentially changed, such as the track number of the data which is currently output, and the packet numbers are output while being sequentially rewritten by a counter. The address generating means 203 generates addresses to which data of the packets can be allocated.

In the same manner as the first embodiment, data other than a DVC are recorded into a DVC packet in the format of Fig. 3(a) in the case of the 25-Mbps mode, and in the format of Fig. 3(b) in the case of the 12.5-Mbps mode.

On the basis of an input from the input data judging means 200, the data kind code generating means 208 generates a flag indicating whether the disposed data are those obtained by recording DVC data as they are or not, and a flag indicating which one of the 25-Mbps mode and the 12.5-Mbps mode is used in the recording. The flags are added together with other auxiliary information generated by the auxiliary information generating means 206, to the input data.

The data which have undergone the above-mentioned conversion are output to the recording/reproducing apparatus 1, and then recorded into the cassette 3 by the record/reproduction processing circuit 6.

As a result of this operation, digital VTR data and other data are switched over, and then converted into a data format corresponding to the recording function of a currently-used digital VTR deck, thereby allowing both a data file and data of a currently-used digital VTR to be recorded without problems.

According to the invention, by using characteristics that the position of a code word of a DC component indicating the starting position of a small block is fixed, and that, when an end-of-block code is added, a region from the added position to the starting position of the next small block becomes a data region which is ineffective for decoding and reproduction in a currently-used digital VTR, a data file other than a video and audio signal of a predetermined format is converted and then output, thereby enabling the data file to be recorded by a currently-used digital VTR deck. Furthermore, data on a recording medium are identical with transmission and record formats of the recording medium. A data file portion is judged as an ineffective data region, and skipped by a reproducing/decoding device of the currently-used digital VTR deck. Therefore, a tape on which the data file is recorded can be seen also on a currently-used digital VTR deck without problems.

In order to enhance the error tolerance, a process such as double writing of data may be performed. In this case, the data rate depends on the amount of ineffective dummy data, and is reduced to 1/2 at the worst.

### (Embodiment 6)

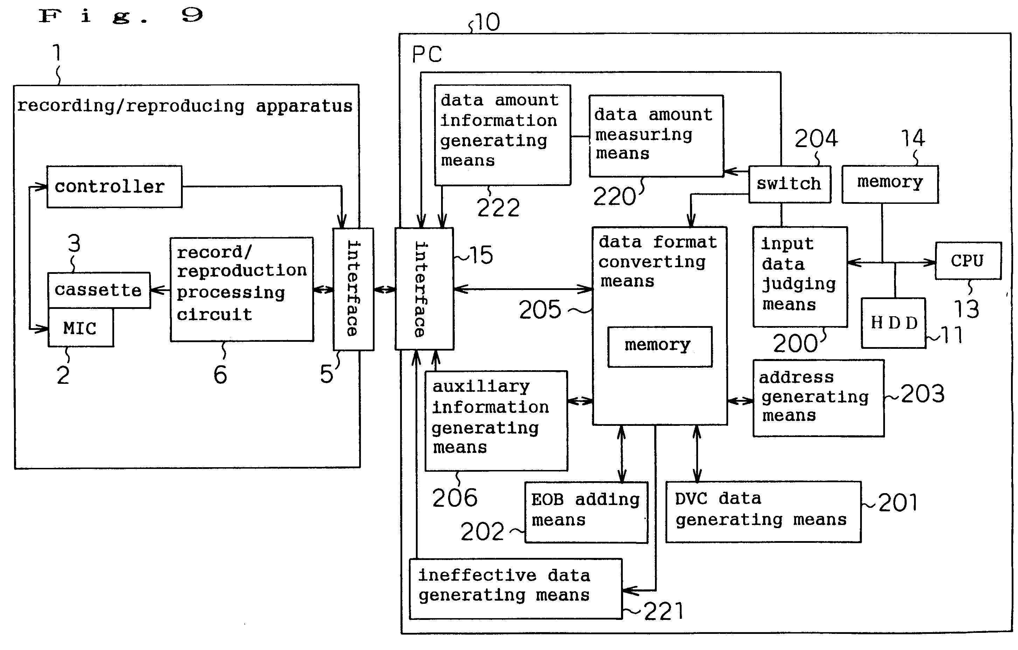

Fig. 9 is a block diagram of Embodiment 6 of the invention. In Fig. 9, 1 denotes a recording/reproducing apparatus, 3 denotes a cassette, 2 denotes an MIC, 6 denotes a record/reproduction processing circuit, 10B denotes a personal computer (PC), 11 denotes a hard disk, 13 denotes a CPU, 14 denotes a memory, and 5 and 15 denote interfaces.

Hereinafter, the operation of the thus configured PC and the recording/reproducing apparatus connected thereto will be described.

In the following, description will be made on the case where data files accumulated in the hard disk 11 in the PC are transferred to the recording/reproducing apparatus 1 and recorded.

The input data judging means 200 judges whether data input from the hard disk 11 in the PC 10 are DVC data or not.

If it is judged as a result of the judgment that the input data are DVC data, the input data are output as they are through the switch 204. In this case, the data are recorded in the format of a DVC packet such as shown in Fig. 2.

In the case where the input data are not DVC data, the data are switched by the switch 104 so as to be input into the data format converting means 205, and then converted into the format shown in Fig. 3.

The DVC data generating means 201 connected to the data format converting means 205 outputs data patterns of packets in a memory, to a buffer in a given sequence. In this case, values which are sequentially changed, such as the track number of the data which is currently output, and the packet numbers are output while being sequentially rewritten by a counter. The address generating means 203 generates addresses to which data of the packets can be allocated.

In the same manner as the first embodiment, data other than a DVC are recorded into a DVC packet in the format of Fig. 3(a) in the case of the 25-Mbps mode, and in the format of Fig. 3(b) in the case of the 12.5-Mbps mode.

The data which have undergone the above-mentioned conversion are recorded into the cassette by the record/reproduction processing circuit 6. In the embodiment, the data are recorded on a tape in the format such as shown in Fig. 6. In a DVC, the rate of recording data on a tape is constant. When the rate of input data from the PC is variable, therefore, the data must be recorded with adding ineffective data so as to attain a constant record data. The data amount measuring means 110 measures the amount of data which are input during a period corresponding to one track, i.e., 1/299.7 sec. Ineffective data of an amount equal to the difference between the measured data amount and the amount of data to be recorded, in this case, 64 bytes H 128 = 2 kbytes are generated by ineffective data generating means 221, and then recorded with being added to the input data. The measurement amount of the data amount measuring means 220 is generated as a flag by data amount information generating means 222 and then recorded with being multiplexed to an input signal.

According to the embodiment described above, when the size of an input data file is not an integer multiple of the size of the region where the data recording is enabled, i.e., the data region which is ineffective for decoding and reproduction in a currently-used digital VTR, or when the input data rate is different from the recording rate of a currently-used deck in spite of conversion and recording conducted so as to maintain the real-timeness, the data file is recorded with adding ineffective dummy data. In a reproducing process, the data file can be reproduced while the added ineffective dummy data are removed away.

In the above, the data amount in one track has been considered. As the setting during the inputting process, this may be set to be in another unit such as ten tracks. In the case where the cassette 3 has the MIC 2 serving as an external storage device, the judgment may be conducted by using information recorded therein.

### (Embodiment 7)

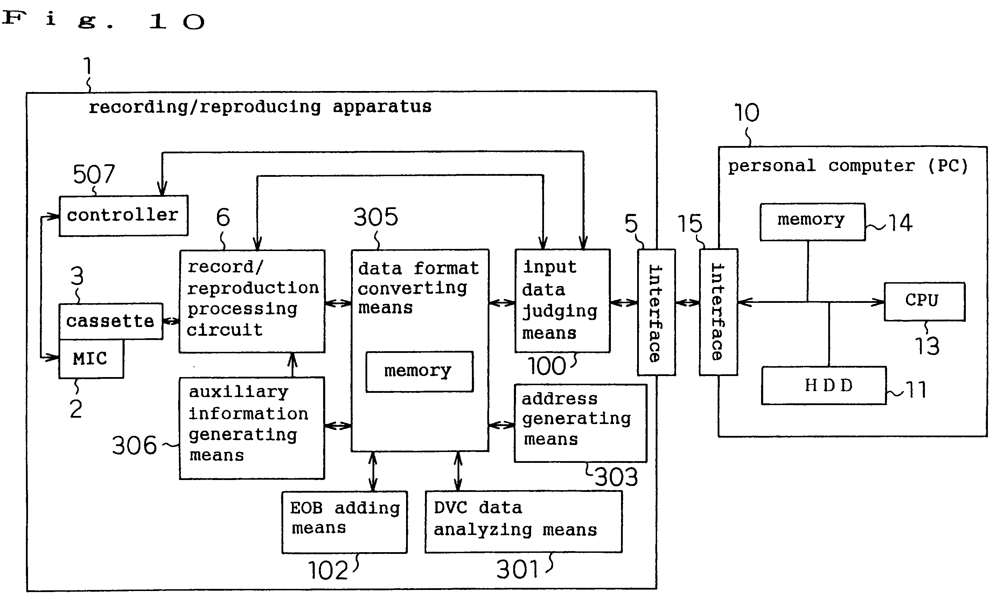

Fig. 10 is a block diagram of Embodiment 7 of the invention. In Fig. 10, 301 denotes a recording/reproducing apparatus, 3 denotes a cassette, 2 denotes an MIC, 6 denotes a record/reproduction processing circuit, 10 denotes a personal computer (PC), 11 denotes a hard disk, 13 denotes a CPU, 14 denotes a memory, 5 and 15 denote interfaces, 301 denotes DVC data analyzing means, 303 denotes address generating means, 305 denotes data format converting means, and 306 denotes auxiliary information generating means.

Hereinafter, the operation of the thus configured recording/reproducing apparatus will be described.

In the following description, description will be made on the case where data files accumulated in the hard disk 11 in the PC are transferred to the recording/reproducing apparatus 1 and recorded. The input data judging means 100 judges whether data input through the interface 5 are DVC data or not. If it is judged that the input data are not DVC data, the data are converted by the data format converting means 305.

The DVC data analyzing means 301 connected to the data format converting means 305 analyzes data patterns of packets in a memory with reference to the track number of the data which is currently output, the packet numbers, and the like, and outputs them to a buffer in a given sequence. The address generating means 302 generates addresses to which data of the packets can be allocated. The auxiliary information generating means 306 obtains, from auxiliary information, a flag indicating which one of the 25-Mbps mode and the 12.5-Mbps mode is used in the recording of the data, and a flag indicating whether double writing of data is conducted or not, and switches over the operation of the address generating means 303. Data recorded in the 25-Mbps mode have the format of Fig. 3(a), and those recorded in the 12.5-Mbps mode have the format of Fig. 3(b). PC data are output from a data storing region in the format.

As a result of this operation, the embodiment has both the recording function of a currently-used digital VTR deck, and the function of recording data other than digital VTR data. At the same time as the switching, also information indicative of the format in which the recording is performed is recorded. Therefore, it is possible to record both a data file and data of a currently-used digital VTR without problems.

According to the invention, by using characteristics that the position of a code word of a DC component indicating the starting position of each small block is fixed, and that, when an end-of-block code is added, a region from the added position to the starting position of the next small block becomes a data region which is ineffective for decoding and reproduction in a currently-used digital VTR, it is possible to reproduce, from a recording medium on which a data file other than a video and audio signal of a predetermined format is recorded, the data file. In the case where the cassette has an MIC serving as an external storage device, the judgment may be conducted by using information recorded therein.

### (Embodiment 8)

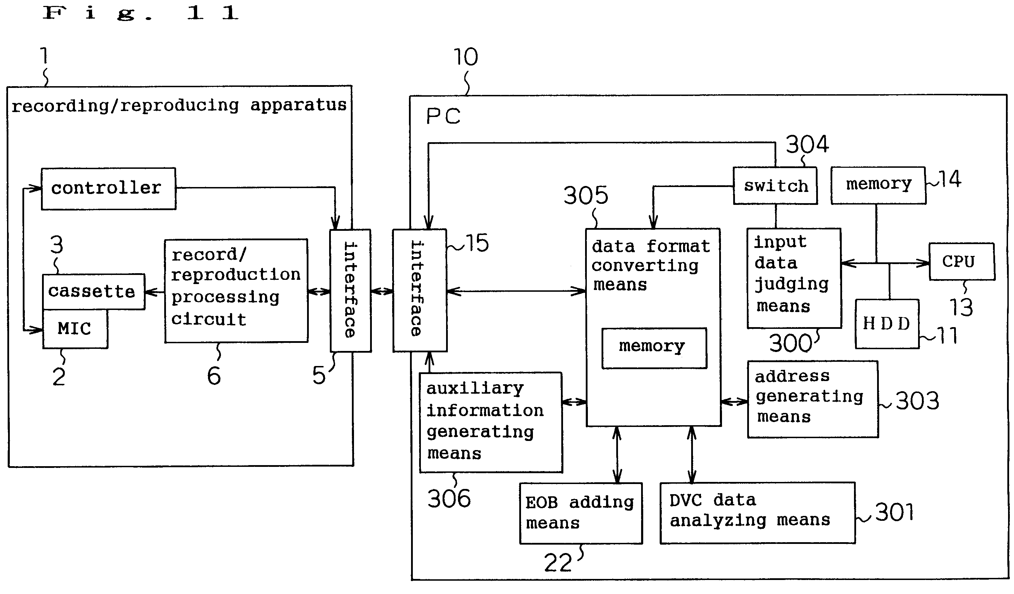

Fig. 11 is a block diagram of Embodiment 8 of the invention. In Fig. 11, 1 denotes a recording/reproducing apparatus, 3 denotes a cassette, 2 denotes an MIC, 6 denotes a record/reproduction processing circuit, 10 denotes a personal computer (PC), 11 denotes a hard disk, 13 denotes a CPU, 14 denotes a memory, 5 and 15 denote interfaces, 300 denotes input data judging means, 301 denotes DVC data analyzing means, 303 denotes address generating means, 304 denotes a switch, 305 denotes data format converting means, and 306 denotes auxiliary information generating means.

Hereinafter, the operation of the thus configured recording/reproducing apparatus will be described.

In the following, description will be made on the case where data files accumulated in the hard disk 11 in the PC are transferred to the recording/reproducing apparatus 1 and recorded.

The input data judging means 300 judges whether data input from the hard disk 11 are DVC data or not.

If it is judged as a result of the judgment that the input data are DVC data, the input data are output as they are through the switch 304. In this case, the data are output in the format of a DVC packet such as shown in Fig. 2.

In the case where the input data are not DVC data or have the format shown in Fig. 3, the data are switched by the switch 304 so as to be input into the data format converting means 305 and then converted.

The DVC data analyzing means 301 connected to the data format converting means 305 analyzes data patterns of packets in a memory with respect to the track number of the data which is currently output, the packet numbers, and the like, and outputs them to a buffer in a given sequence. The address generating means 303 generates addresses to which data of the packets can be allocated. The auxiliary information judging means 306 obtains, from auxiliary information, a flag indicating which one of the 25-Mbps mode and the 12.5-Mbps mode is used in the recording of the data, and a flag indicating whether double writing of data is conducted or not, and switches over the operation of the address generating means 303. Data recorded in the 25-Mbps mode have the format of Fig. 3(a), and those recorded in the 12.5-Mbps mode have the format of Fig. 3(b). PC data are output from a data storing region in the format.

In the case where the cassette 3 has the MIC 2 serving as an external storage device, the judgment may be conducted by using information recorded therein.

According to the invention, by using characteristics that the position of a code word of a DC component indicating the starting position of each small block is fixed, and that, when an end-of-block code is added, a region from the added position to the starting position of the next small block becomes a data region which is ineffective for decoding and reproduction in a currently-used digital VTR, it is possible to reproduce, from a recording medium on which a data file other than a video and audio signal of a predetermined format is recorded, the data file. Furthermore, the function of a reproducing/decoding device of a currently-used digital VTR deck, and also the above-mentioned function are provided and switched over, thereby enabling both a tape on which a data file is recorded, and that on which recording is conducted by a currently-used digital VTR deck, to be seen without problems.

### (Embodiment 9)

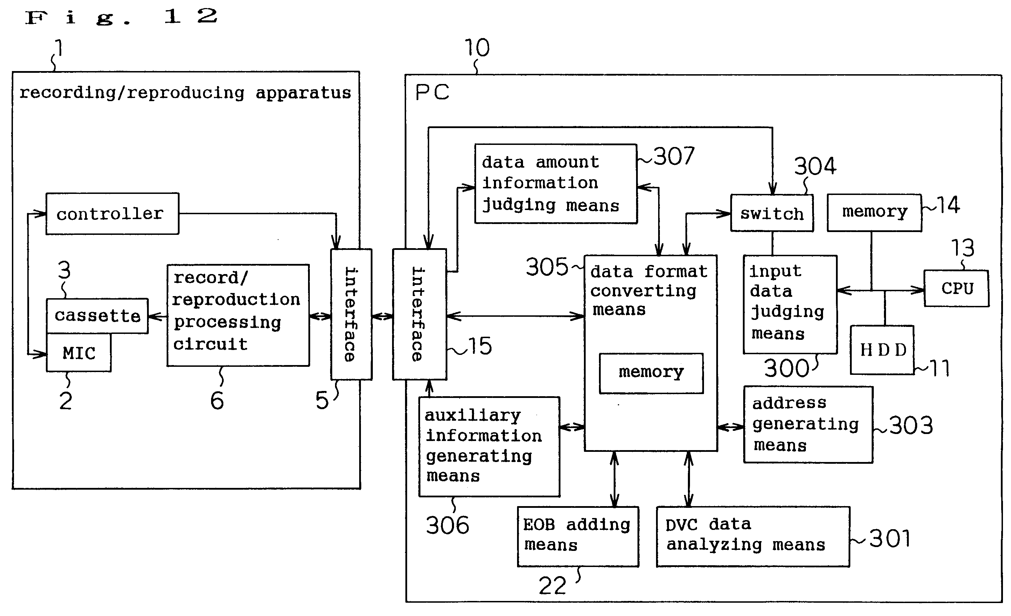

Fig. 12 is a block diagram of Embodiment 9 of the invention. In Fig. 12, 1 denotes a recording/reproducing apparatus, 3 denotes a cassette, 2 denotes an MIC, 6 denotes a record/reproduction processing circuit, 10 denotes a personal computer (PC), 11 denotes a hard disk, 13 denotes a CPU, 14 denotes a memory, 5 and 15 denote interfaces, 300 denotes input data judging means, 301 denotes DVC data analyzing means, 303 denotes address generating means, 304 denotes a switch, 305 denotes data format converting means, 306 denotes auxiliary information generating means, and 307 denotes data amount information judging means.

Hereinafter, the operation of the thus configured recording/reproducing apparatus will be described.

In the following, description will be made on the case where data files accumulated in the hard disk 11 in the PC are transferred to the recording/reproducing apparatus 1 and recorded.

The input data judging means 300 judges whether data input from the hard disk 11 are DVC data or not.

If it is judged as a result of the judgment that the input data are DVC data, the input data are output as they are through the switch 304. In this case, the data are output in the format of a DVC packet such as shown in Fig. 2.

In the case where the input data are not DVC data or have the format shown in Fig. 3, the data are switched by the switch 304 so as to be input into the data format converting means 305 and then converted.

The DVC data analyzing means 301 connected to the data format converting means 305 analyzes data patterns of packets in a memory with respect to the track number of the data which is currently output, the packet numbers, and the like, and outputs them to a buffer in a given sequence. The address generating means 303 generates addresses to which data of the packets can be allocated. The auxiliary information judging means 306 obtains, from auxiliary information, a flag indicating which one of the 25-Mbps mode and the 12.5-Mbps mode is used in the recording of the data, and a flag indicating whether double writing of data is conducted or not, and switches over the operation of the address generating means 303. Data recorded in the 25-Mbps mode have the format of Fig. 3(a), and those recorded in the 12.5-Mbps mode have the format of Fig. 3(b). PC data are output from a data storing region in the format.

By using the data amount information judging means 307, the record amount in the 2 kbytes of one track is judged from the data amount information in an input signal. Data subsequent to the judged data amount are set as ineffective data and removed away. Thereafter, an outputting process is performed.

As a result of this operation, the embodiment has both the recording function of a currently-used digital VTR deck, and the function of recording data other than digital VTR data. At the same time as the switching, also information indicative of the format in which the recording is performed is recorded. Therefore, it is possible to record both a data file and data of a currently-used digital VTR without problems.

According to the above-mentioned operation, information of the track data amount in each track in an input digital video and audio coded signal is obtained, and only a data amount indicated by the track data amount information is output from a general-purpose data recording region in each track in the digital video and audio coded signal, whereby a data which is input at a variable rate can be correctly reproduced.

In the above, the data amount in one track has been considered. As the setting during the inputting process, this may be set to be in another unit such as ten tracks. In the case where the cassette has an MIC serving as an external storage device, the judgment may be conducted by using information recorded therein.

### (Embodiment 10)

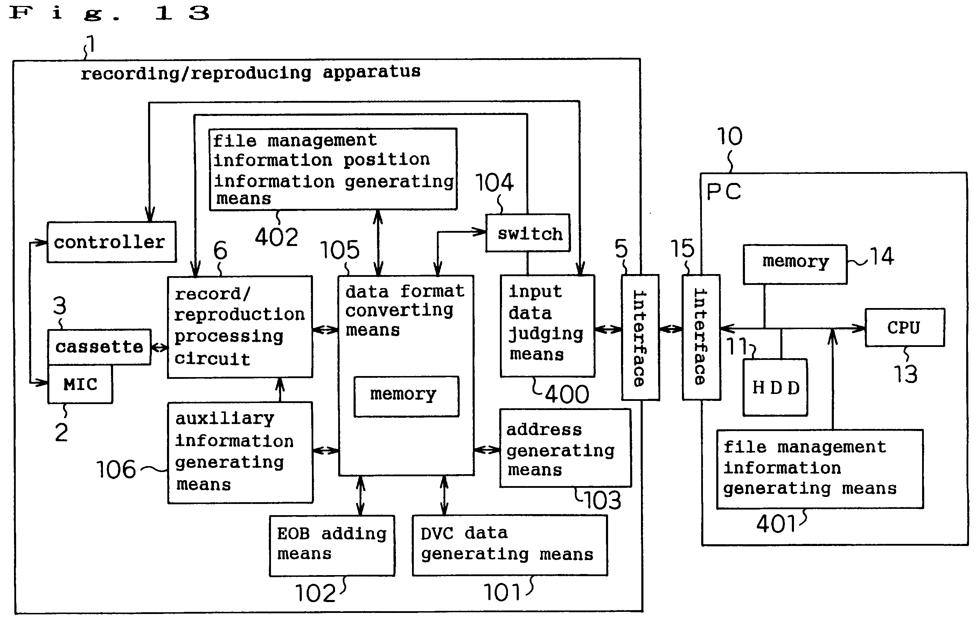

Fig. 13 is a block diagram of Embodiment 10 of the invention. In Fig. 13, 1 denotes a recording/reproducing apparatus, 3 denotes a cassette, 2 denotes an MIC, 6 denotes a record/reproduction processing circuit, 10 denotes a personal computer (PC), 11 denotes a hard disk, 13 denotes a CPU, 14 denotes a memory, 5 and 15 denote interfaces, 400 denotes input data judging means, 101 denotes DVC data generating means, 102 denotes EOB adding means, 103 denotes address generating means, 104 denotes a switch, 105 denotes data format converting means, 106 denotes auxiliary information generating means, 401 denotes file management information generating means, and 402 denotes file management information position information generating means.

Hereinafter, the operation of the thus configured recording/reproducing apparatus will be described.

In the following, description will be made on the case where data files accumulated in the hard disk 11 in the PC are transferred to the recording/reproducing apparatus 1 and recorded.

It is assumed that data on the PC are input into and recorded by the recording/reproducing apparatus in, for example, the method described in Embodiment 1.

At this time, the file management information generating means 401 generates management information for handling data recorded in a DVC as a file on the PC 10 and the like. Specifically, a certain given continuous zone on a tape is regarded as a file, and the name of the file, the start position, the size, the time and date of recording, and the like are generated. The generated data are sent to the DVC in the same manner as conventional data, at a timing which is preset in the PC 10, for example, a timing immediately before when a program of connection with a DVC is ended.

In this specification, files are not restricted to data files. When the file start position, the file end position, or the track number is determined as one file unit and the name of a file, the time and date of updation, and the like are added, also data of a currently-used digital VTR can be handled in the same manner as a data file.

The input data judging means 400 judges whether data input from the hard disk 11 of the PC 10 are DVC data or not, and whether the data are file management information or not. In this case, also conditions of the data which are to be output, for example, whether the data correspond to the 25-Mbps mode which is the standard one for a DVC or not, or whether the data correspond to a mode of a low rate or 12.5 Mbps or not are judged by the input data judging means 100. If it is judged as a result of the judgment that the input data are file management information, the input data are switched over by the switch 104 so as to be input into the data format converting means 105.

The DVC data generating means 101 connected to the data format converting means 105 outputs data patterns of packets in a memory, to a buffer in a given sequence. In this case, values which are sequentially changed, such as the track number of the data which is currently output, and the packet numbers are output while being sequentially rewritten by a counter. The address generating means 103 generates addresses to which data of the packets can be allocated.

In the same manner as the first embodiment, data other than a DVC are recorded into a DVC packet in the format of Fig. 3(a) in the case of the 25-Mbps mode, and in the format of Fig. 3(b) in the case of the 12.5-Mbps mode.

On the basis of an input from the input data judging means 100, the auxiliary information generating means 106 generates a flag indicating whether the recorded data are those obtained by recording DVC data as they are or not, a flag indicating file management information, and a flag indicating which one of the 25-Mbps mode and the 12.5-Mbps mode is used in the recording, and adds the flags to the input data.

The file management information position information generating means 402 generates information relating to the record position of file management information on a tape, and multiplexes it into an input signal. This may be recorded at the head of a tape or at a specific position such as that on the MIC 2, or written into all tracks in which file management information is recorded, or as auxiliary information indicating that the tracks are those in which file management information is recorded.

The data which have undergone the above-mentioned conversion are recorded into the cassette 3 by the record/reproduction processing circuit 6.

In order to enhance the error tolerance, a process such as double writing of data may be performed.

According to the invention, a region is set in the same manner as that which is disposed for recording a data file, and management information of each file, such as the name of the file, the time and date of updation of the file, information of the file start position, the file size, information of the file end position, or information of the number of tracks is recorded. In a process of reproduction, therefore, it is possible to realize functions such as an access in the unit of a file which can be performed in a hard disk connected to a PC. Consequently, the contents of data in a recording medium can be easily known, and a rapid access to the position of contents which are to be seen is enabled.

### (Embodiment 11)

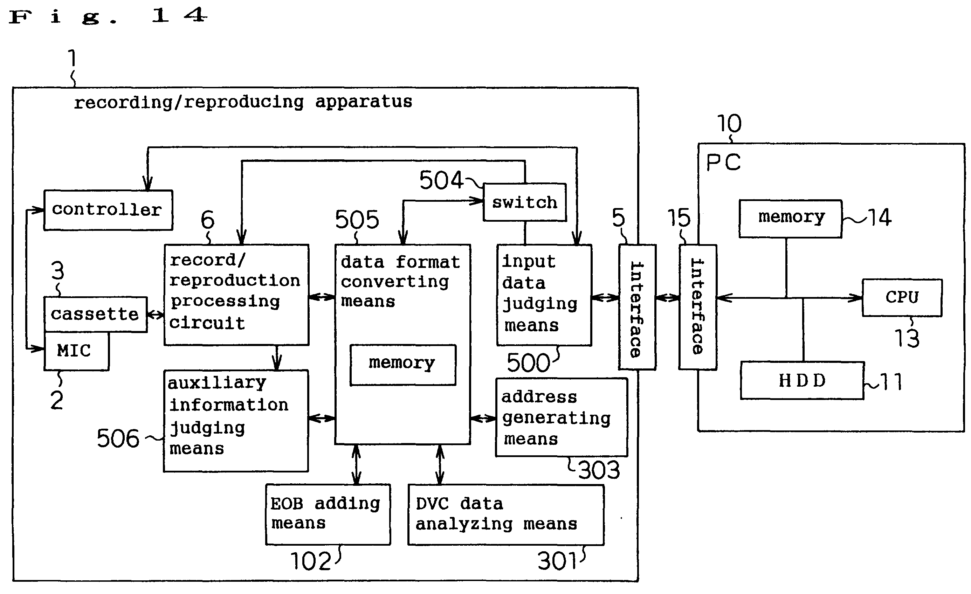

Fig. 14 is a block diagram of Embodiment 11 of the invention. In Fig. 14, 1 denotes a recording/reproducing apparatus, 3 denotes a cassette, 2 denotes an MIC, 6 denotes a record/reproduction processing circuit, 10 denotes a personal computer (PC), 11 denotes a hard disk, 13 denotes a CPU, 14 denotes a memory, 5 denotes an interface, 500 denotes input data judging means, 301 denotes DVC data analyzing means, 303 denotes address generating means, 504 denotes a switch, 505 denotes data format converting means, and 506 denotes auxiliary information judging means.

Hereinafter, the operation of the thus configured recording/reproducing apparatus will be described.

In the following, description will be made on the case where data files accumulated in the hard disk 11 in the PC 10 are transferred to the recording/reproducing apparatus 1 and recorded.

The input data judging means 500 judges whether data input from the interface 5 are DVC data or not, and whether the data are file management information or not. If it is judged as a result of the judgment that the input data are DVC data, the input data are output as they are through the switch 504. In this case, the data are output in the format of a DVC packet such as shown in Fig. 2.

In the case where the input data are not DVC data or have the format shown in Fig. 3, the data are switched by the switch 504 so as to be input into the data format converting means 505 and then converted.

Particularly, when the input data are file management information, a controller 507 judges the record position of the file management information on a tape, and controls the tape so as to run to the position. File management information position information on the tape or the MIC 2 may be read out, or auxiliary information indicating that the track records file management information may be read.

The DVC data analyzing means 301 connected to the data format converting means 505 analyzes data patterns of packets in a memory with respect to the track number of the data which is currently output, the packet numbers, and the like, and outputs them to a buffer in a given sequence. The address generating means 303 generates addresses to which data of the packets can be allocated. The auxiliary information judging means 506 obtains, from auxiliary information, a flag indicating which one of the 25-Mbps mode and the 12.5-Mbps mode is used in the recording of the data, and a flag indicating whether double writing of data is conducted or not, and switches over the operation of the address generating means 303. Data recorded in the 25-Mbps mode have the format of Fig. 3(a), and those recorded in the 12.5-Mbps mode have the format of Fig. 3(b). PC data are output from a data storing region in the format.

In the case where the cassette has the MIC 2 serving as an external storage device, the judgment may be conducted by using information recorded therein.

According to the invention, a region is set in the same manner as that which is disposed for recording a data file, and management information of each file, such as the name of the file, the time and date of updation of the file, information of the file start position, the file size, information of the file end position, or information of the number of tracks is recorded. In a process of reproduction, therefore, it is possible to realize functions such as an access in the unit of a file which can be performed in a hard disk connected to a PC. Consequently, the contents of data in a recording medium can be easily known, and a rapid access to the position of contents which are to be seen is enabled.

### (Embodiment 12)

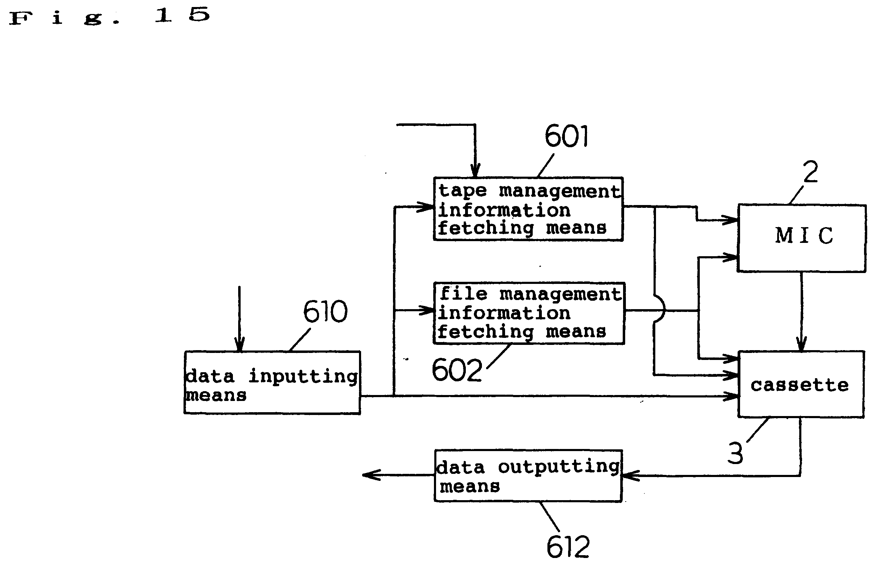

Fig. 15 is a block diagram of Embodiment 12 of the invention. In the figure, 602 denotes file management information fetching means, and 2 denotes an MIC.

When an unused cassette is set in a recording/reproducing apparatus, tape management information fetching means 601 generates a cassette ID which is an identification of the cassette, and the cassette ID is recorded in the MIC 2. In the case where a cassette which is to be input into the recording/reproducing apparatus is a currently-used cassette, a cassette ID is read out from the cassette by the tape management information fetching means 601. Data transmitted from an external apparatus are input into data inputting means 610. The data input from the data inputting means 610 are sent to the file management information fetching means 602, the tape management information fetching means 601, and a cassette 3. The tape management information fetching means 601 fetches auxiliary information such as the type of a video signal of the input data.

On the other hand, the file management information fetching means 602 fetches, for each file, information of the file recorded on a tape, that is, the name of the file, the time and date of recording on the tape, the size of the file, copyright information of the file, copy control information of the file, and the readout position of the file in the tape. When a volume consisting of plural files and complying with ISO/IEC 13346 (hereinafter, 13346) which defines a format of a file management system is to be recorded onto a tape, the file management information fetching means 602 fetches data in which a volume, a partition, a directory, and a descriptor for managing files that are specified in 13346 are recorded. The information fetched by the file management information fetching means 602 and the tape management information fetching means 601 is recorded into the MIC 2. The data fetched from the data inputting means 610 and the tape management information fetching means 601 are recorded into the cassette. The tape management information and file management information recorded in the MIC 2 may be recorded only in the MIC 2, or alternatively part or the whole of the information recorded in the MIC 2 may be recorded in the cassette.

During a process of reproducing the data recorded in the cassette, in addition to auxiliary information relating to the tape such as the cassette ID and the video signal type, information relating to files and recorded in the tape is read out from the MIC 2, and data are reproduced from the magnetic tape in accordance with the readout information. The reproduced data are sent to data outputting means 612, and then output to the outside from the data outputting means 612.

In the embodiment, management information of file data to be recorded in the DVC is recorded in the MIC which, in the prior art, is used for recording only management information of a tape and a cassette, thereby enabling also management information of files to be recorded in a tape, to be recorded. Therefore, an access to a file recorded in the tape is easily performed as compared with the prior art.

In the embodiment, management information of a file to be recorded in the MIC is input from a magnetic tape. Alternatively, file management information may be obtained from an external apparatus from which an output operation to the data inputting means 610 is to be performed, or another external apparatus. Hereinafter, such an embodiment will be described in (Embodiment 13).

### (Embodiment 13)

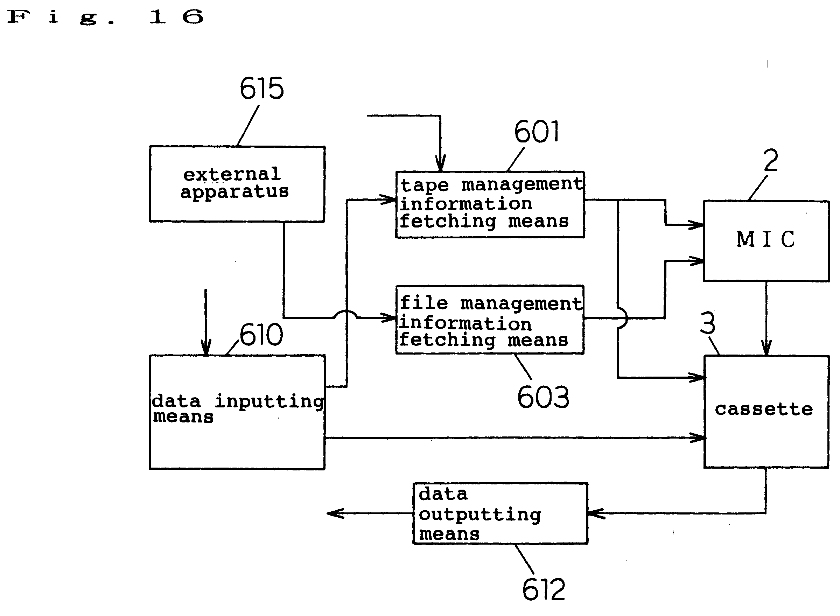

Fig. 16 is a block diagram of Embodiment 13 of the invention. In the figure, 603 denotes file management information fetching means, and 25 denotes an external apparatus. Hereinafter, it is assumed that components denoted by the same reference numeral have the same configuration and function. Hereinafter, the operation of the thus configured recording/reproducing apparatus will be described.

The file management information fetching means 603 receives from the external apparatus 25, for each file, information of the file recorded on a tape, that is, the name of the file, the time and date of recording on the tape, the size of the file, copyright information of the file, and copy control information of the file. The information fetched by the file management information fetching means 603 and the tape management information fetching means 601 is recorded into the MIC 2.

The subsequent operation is identical with that of (Embodiment 12). In the embodiment, management information of file data to be recorded in the DVC is recorded in the MIC which, in the prior art, is used for recording only management information of a tape and a cassette, thereby enabling also management information of each file to be recorded in a tape, to be recorded. Therefore, an access to a file recorded in the tape is easily performed as compared with the prior art.

### (Embodiment 14)

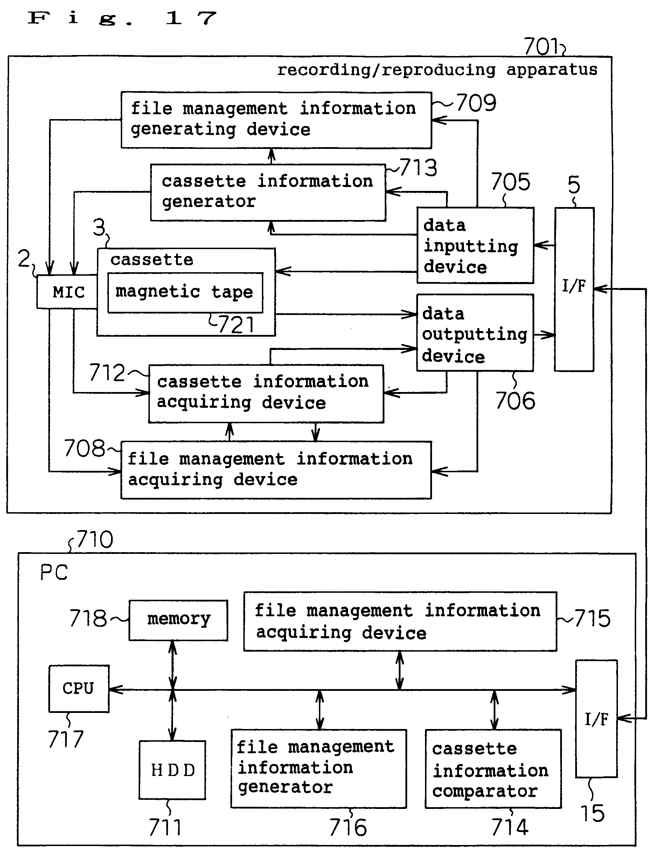

Fig. 17 is a block diagram of Embodiment 14 of the invention. In the figure, 701 denotes a recording/reproducing apparatus, 3 denotes a cassette, 2 denotes an MIC, 705 denotes data inputting means, 706 denotes data outputting means, 710 denotes a personal computer (PC), 711 denotes a hard disk, 712 and 715 denote cassette information acquiring means, 713 and 716 denote cassette information generating means, 714 denotes cassette information comparing means, 708 and 715 denote file management information acquiring means, 709 and 716 denote file management information generating means, 717 denotes a CPU, 718 denotes a memory, and 707 and 719 denote interfaces. Hereinafter, the operation of the thus configured recording/reproducing apparatus will be described.

When an unused cassette is set in the recording/reproducing apparatus 701, it is possible to judge that the cassette is unused, from information obtained from the cassette information acquiring means 712, or a reproduced signal of a tape. The tape management information fetching means 713 generates a cassette ID which is an identification of the cassette, and the cassette ID is recorded in the MIC 2.

In the case where the cassette 3 which is to be input into the recording/reproducing apparatus 701 is a currently-used cassette, a cassette ID is read out from the MIC 2 of the cassette by the cassette information acquiring means 712.

Data which are transmitted from an external apparatus through the interface 5 are input into the data inputting means 705. The data input from the data inputting means 705 are sent to the file management information generating means 709 and the cassette 3. In tape management information generating means 9, auxiliary information such as the type of a video signal of the input data is fetched, and stored together with newly added auxiliary information such as a designated file name, into the MIC 2. At the same time, the auxiliary information is sent to the cassette 3 and the PC 710, and then recorded in recording regions of the hard disk 711 and the memory 718. The time and data of updation of the hard disk 711 are stored into the memory 718, and updatingly recorded into the hard disk 711 and the MIC 2.

At the timing when the cassette is unloaded, the auxiliary information is recorded into an auxiliary information recording region of a magnetic tape 721 in the cassette 3. The time and date when the cassette is unloaded are recorded into the auxiliary information recording region of the tape, the MIC 2, and the hard disk 711.

When data in a magnetic tape 21 are to be reproduced, identification information such as the cassette ID and the time and date information is read out from the MIC 2. The readout identification information is compared with corresponding one on the hard disk 711. If it is judged from the cassette ID or the like that the cassette is identical with that the management information of which is recorded on the hard disk 711, comparison on the time and date of updation of the management information is conducted. When the times and dates of updation coincide with each other, auxiliary information of the hard disk 711 is read out and then stored into the memory 718, and files in the cassette 3 are managed by using the stored auxiliary information. In accordance with the auxiliary information, data are reproduced from the magnetic tape 721.

As compared with the case where management information on a tape is read out and a file is then searched, a file search can be performed more rapidly by using the high reading speed and random accessibility of a hard disk.

If the time and date of updation of the auxiliary information of the hard disk 711 is newer, the auxiliary information of the hard disk 711, and the management information on the tape 721 are read out to be shown to the user, and the user is inquired as to which information is used in the management of a file, or whether management information is to be newly generated or not.

If the user selects the auxiliary information of the hard disk 711, the management information on the hard disk 711 is stored into the memory 718, and, if the user further selects that the management information on the tape 721 is to be overwritten by the auxiliary information of the hard disk 711, an overwriting operation is performed on the tape 721 by using the auxiliary information stored in the memory 718. If the user selects the management information on the tape 721, the management information on the tape 721 is read out to be stored into the memory 718, and, if the user further selects that the management information of the hard disk 711 is to be overwritten by the auxiliary information of the tape 721, an overwriting operation is performed on the hard disk 711 by using the auxiliary information stored in the memory 718.

The case where the time and date of updation of the auxiliary information of the hard disk 711 is newer than the MIC 2 is considered to occur in an occasion, for example, that, during a process of writing the management information and identification information into the MIC 2 or the tape 721, communication between the PC 710 and the recording/reproducing apparatus 701 is caused not to be normally conducted for some reason, or that, during a process of writing into the MIC 2, the recording/reproducing apparatus 701 is caused not to normally operate for some reason.

If the time and date of updation of the auxiliary information of the hard disk 711 is older, the management information on the tape 721 is read out to be stored into the memory 718. If the user further selects that the management information of the hard disk is to be overwritten by the auxiliary information of the tape 721, an overwriting operation is performed on the hard disk 711 by using the auxiliary information stored in the memory 718.

The case where the time and date of updation of the auxiliary information of the hard disk 711 is older than the MIC 2 is considered to occur in an occasion, for example, that the management information and identification information are written on a recording/reproducing apparatus connected to another PC.

Files on the tape 721 are managed by using auxiliary information stored in the memory 718. In accordance with the auxiliary information, data are reproduced from the magnetic tape 721. The reproduced data are sent to the data outputting means 706 and then output to the outside through the interface 5.

As a result of the above-mentioned operation, management information and auxiliary information on the cassette 3 (the tape 721), the hard disk 711, and the MIC 2 can be shared in the latest form.

The file management information acquiring means 708 or 715 fetches, for each file, information of the file on the tape 721 which is stored in the MIC 2 or the hard disk 721, that is, the name of the file, the time and date of recording on the tape, the size of the file, copyright information of the file, copy control information of the file, and the readout position of the file in the tape 21.

Alternatively, when a volume consisting of plural files and complying with ISO/IEC 13346 (hereinafter, 13346) which defines a format of a file management system is to be recorded onto a tape, the file management information acquiring means 712 and 715 fetch data in which a volume, a partition, a directory, and a descriptor that are specified in 13346 are recorded.

Data which are fetched from the data inputting means 6, the cassette information generating means 13, and the tape management information generating means 9 are recorded onto the magnetic tape 721.

In the embodiment, identification information for distinguishing a tape, and information relating to times and dates of the identification information, the contents of the tape, and management information are recorded in the MIC 2 which, in the prior art, is used for recording only management information of the tape 721 and the cassette 3, thereby enabling the record position of latest management information of each file to be recorded on the tape 721, to be judged. During a reproduction process, therefore, it is possible to select latest management information. When management information has the same contents, it is possible to read out management information from a medium of the highest access speed. Consequently, a file recorded on a tape can be rapidly accessed as compared with the prior art.

In the embodiment, data which are identical with management information of files to be recorded on the tape 721 are recorded on the hard disk 711. Alternatively, part of file management information which is to be recorded on the tape 721 may be recorded, or the format of management information to be recorded may be converted into another one.

Alternatively, part of file management information which is to be recorded on the tape may be recorded in the MIC 2, or the format of management information to be recorded may be converted into another one. The judgment on fetch and selection of information may be performed by a combination of the CPU and the memory or programs on the hard disk.

In the embodiment, there is a possibility that the three kinds of file management information, i.e., the file management information on the hard disk 711, the file management information on the tape 721, and the file management information in the MIC 2 are handled. However, it is difficult for the user to handle user interfaces respectively corresponding to the three kinds of file management information, in order to handle the three kinds of file management information. Therefore, a user interface common to the three kinds of file management information is provided.

### (Embodiment 15)

Assuming that, for example, DIR command in DOS or the file manager in Windows OS is used as a user interface, minimum management information which is required in the common user interface includes name information (may be omitted) relating to a drive, time and date information of latest updation, capacity information of the whole of the drive and information relating to a space region, directories in the drive, name information of files, time and date information of latest updation, and capacity information.

It is assumed that the three kinds of file management information, i.e., the file management information on the hard disk 711, the file management information on the tape 721, and the file management information in the MIC 2 comprise at least the above-mentioned necessary management information but are arranged in different manners. In the MIC, particularly, data are recorded with being packed as closely as possible in order to suppress the capacity required for recording management information to a minimum level. In the tape and the hard disk, since they have a sufficient capacity, auxiliary management information is provided in addition to the above-mentioned data. In this way, recording is conducted in different methods.

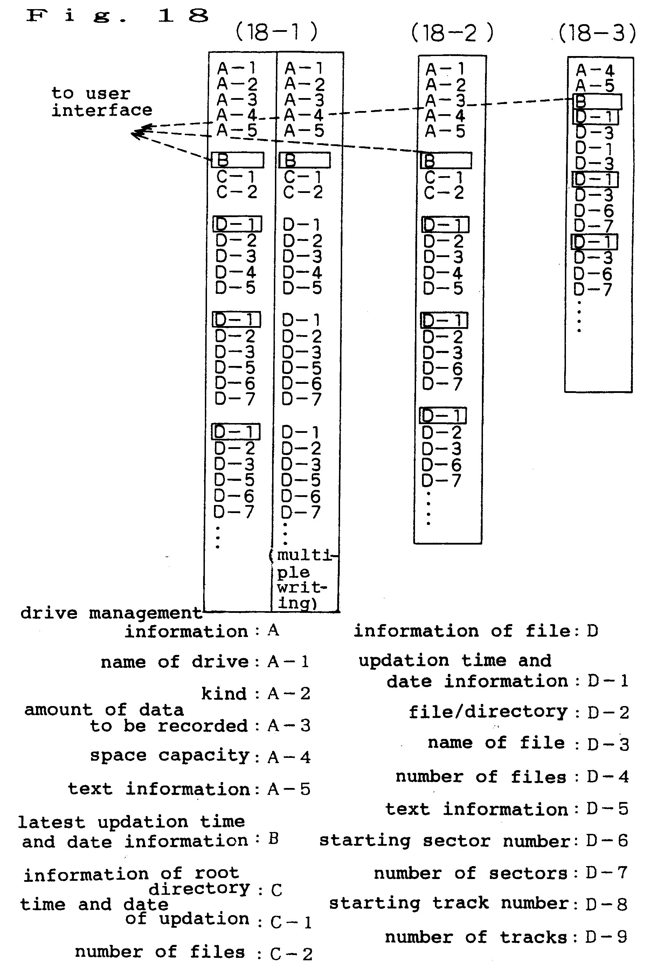

Fig. 18 shows a form of recording in an embodiment of the invention.

A CPU determines which one of three kinds of file management information is used, in the same manner as the first embodiment. Then, information relating to the record format of each management information is obtained.

It is assumed that information on the tape has an arrangement of 18-1, that on the hard disk an arrangement of 18-2, and that in the MIC an arrangement of 18-3.

As shown in the figure, recording is conducted in different methods so that, for example, management information is provided. When the CPU acquires, for example, D data which is information indicative of the time and data of updation from each management information, however, it is possible to obtain common information from the three media.

On the basis of obtained information relating to the record format, management information is read out, and then displayed on the user interface. The user sees the three kinds in the identical display format.

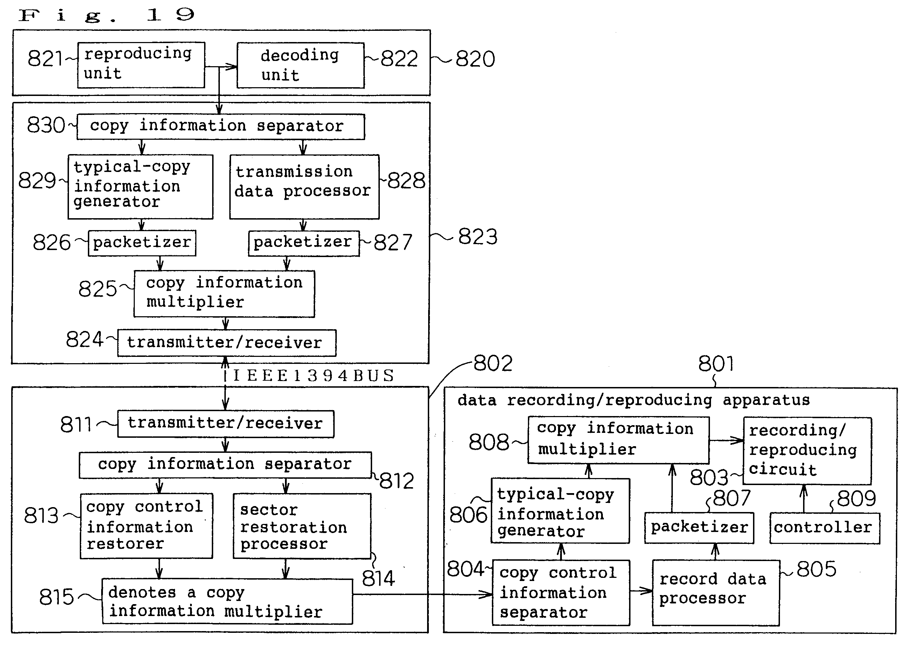

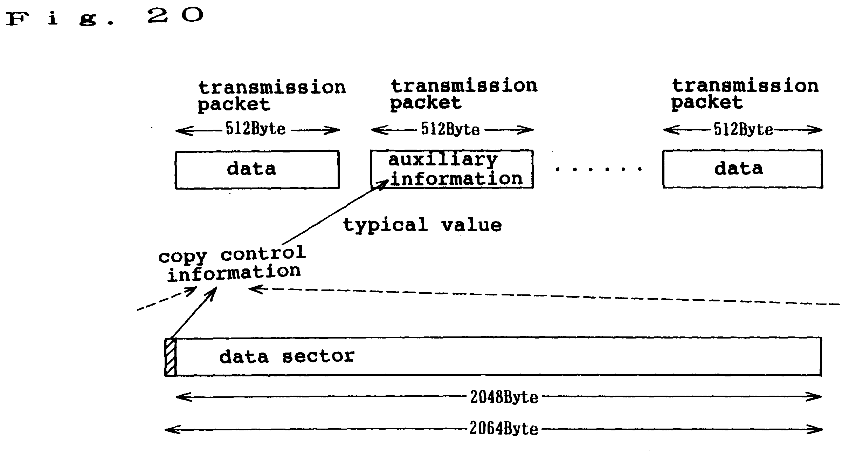

Fig. 19 is a block diagram of an embodiment of the invention, and Fig. 20 shows a form of transmitting data.

Various data processing apparatuses are connected to an IEEE 1394 bus 800. In the embodiment, 801 denotes a data recording/reproducing apparatus, 803 denotes a recording/reproducing circuit, 804 denotes a copy information separator, 805 denotes a record data processor, 806 denotes a typical-copy information generator, 807 denotes a packetizer, 808 denotes a copy information multiplier, 809 denotes a controller, and 802 denotes an interface unit. In the interface unit 802, 811 denotes a transmitter/receiver, 812 denotes a copy information separator, 813 denotes a copy control information restorer, 814 denotes a sector restoration processor, and 815 denotes a copy information multiplier.

The reference numeral 820 denotes a digital data disk serving as a data outputting apparatus, 821 denotes a reproducing unit, 822 denotes a decoding unit, and 823 denotes an interface unit. In the interface unit 823, 824 denotes a transmitter/receiver, 830 denotes a copy information separator, 829 denotes a typical-copy information generator, 826 and 827 denote packetizers, 828 denotes a transmission data processor, and 825 denotes a copy information multiplier.

Hereinafter, the operation of the digital data bus to which the thus configured data processing apparatus and the like are connected will be described. It is assumed that a data flow in the system is performed by isochronous transmission.

In the digital data disk 820, the reproducing unit 825 reproduces digital data in the unit of a sector and sends the reproduced data in the sector form to the interface unit 823 and the decoding unit 822. The decoding unit 822 separates and decodes the input data and then outputs to a display device, etc.

The copy information separator 830 separates copy information written at a specific position of a sector, from the data sent to the interface unit 823. The transmission data processor 831 partitions data from which copy information is separated, into parts of the size of a transmission packet according to 1394, and the packetizer 827 adds a header of a predetermined format of IEEE 1394 to form a transmission packet. As required, the transmission data processor 828 performs processes such as an addition of a time stamp for defining the transmission timing.

The separated copy information is generally seemed to have the same value such as "copy once" within a certain range, for example, in one file. As a typical value of such copy information corresponding to one file, typical copy information is generated by the typical-copy information management information generator 829. When the specific range such as a file is not clarified, copy information in continuous ranges is searched to detect a range of the same copy information, the range is handled as one file, and typical copy information of one file is similarly generated. In the same manner as the input data from which copy information is separated, the generated typical copy information is converted into the format of a transmission packet by the packetizer 826. The above-mentioned packets, i.e., the packet of the typical copy information, and that of the input data from which copy information is separated are again multiplexed by the copy information multiplier 825, and then sent out to the bus by the transmitter/receiver 824.

In the data recording/reproducing apparatus 802, data input to the interface unit 802 from the transmitter/receiver 811 are separated into a packet of typical copy information, and a data packet by the copy information separator 812. The sector restoration processor 814 restores the format of the original sector from the data packet. The copy control information restorer 813 restores copy information of each sector from the separated typical copy information, and the copy information multiplier 15 adds copy information to each sector.

As a result of the above-mentioned operation, the data on the transmission side are completely reconstructed. In the embodiment, copy information multiplexed for each sector is once removed away, and a typical value is generated to reduce the number, thereby enabling the transmission band to be effectively used. In a receiver, it is not required to judge copy information of each sector, and the judgement on whether copying is enabled or not can be performed by seeing only typical copy information. Therefore, no wasteful time is consumed in transmission.

In the case where data which are input into the data recording/reproducing apparatus 801 are supplied from the digital data disk, the copy information separator 804 separates copy information written at a specific position of a sector.

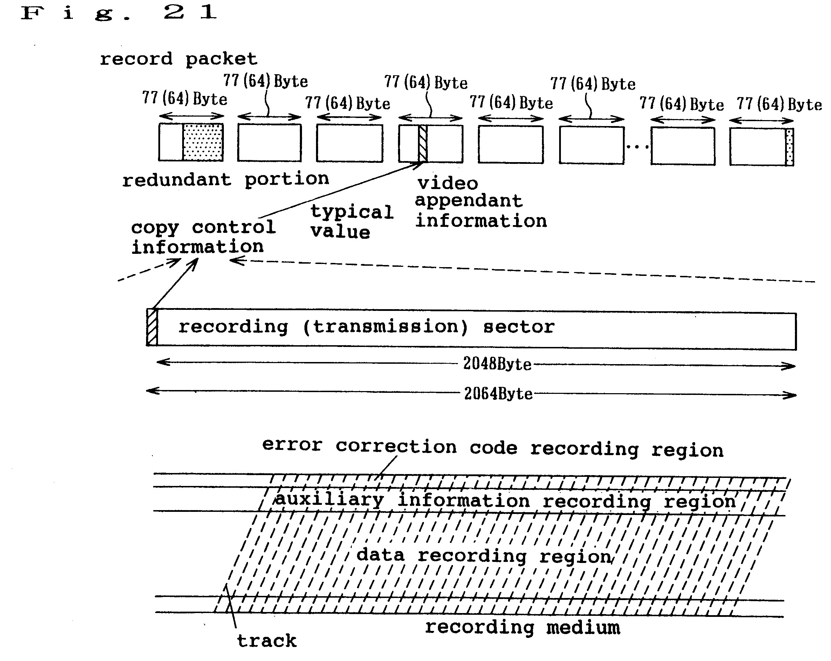

The record data processor 805 converts the input data into a format in which the recording of the input data is enabled. Specifically, a sector with copy information and having a size of 2,064 Bytes is separated into plural parts as shown in Fig. 21, and the packetizer 807 adds a header to generate a record packet of 78 Bytes.

As required, the record data processor 805 performs processes such as an addition of a time stamp for defining the reproduction timing. In accordance with requirement of increasing or decreasing the data rate, dummy data are inserted.

The separated copy information is generally seemed to have the same value such as "copy once" within a certain range, for example, in one file. As a typical value of such copy information corresponding to one file, typical copy information is generated by the typical-copy information management information generator 6.

When the specific range such as a file is not clarified, copy information in continuous ranges is searched to detect a range of the same copy information, the range is handled as one file, and typical copy information of one file is similarly generated. The copy information multiplier 808 disposes the generated typical copy information at a specific position on the recording medium, for example, in a region called an AUX region where information relating to files is to be recorded. With respect to the record packet of the input data from which copy information is separated, the position in a track is determined by the copy information multiplier 808. The record packet is recorded together with the typical copy information in the AUX region by the recording circuit 803. The controller 809 manages the operation of the recording circuit, etc.

As a result of the above-mentioned operation, the typical copy information is separated and recorded. In the embodiment, copy information multiplexed for each sector is once removed away, and a typical value is generated to reduce the number, thereby enabling the recording capacity to be effectively used. During a process of reproduction, it is not required to judge copy information of each sector, and the judgement on whether copying is enabled or not can be performed by seeing only typical copy information. Therefore, no wasteful time is consumed in the judgment during a process of reproduction.

In the above embodiments, an IEEE 1394 bus is used as a digital data bus. Alternatively, another bus may be used as far as it satisfies conditions such as the timing accuracy which are required in a digital video data transmission and the like.

The above-described data conversion method is an example. Even when the sector structure, and the structures of the record and transmission packets are configured in another manner, similar processing can be performed.

The means in the invention may be realized by software means with using a computer, or alternatively by using dedicated hardware circuits respectively having the functions of the means.

Also a medium such as a disk which stores programs for realizing the whole or part of the functions of the means in the invention is within a scope of the invention.

### Industrial Applicability

As described above, according to the invention, by using characteristics that the position of a code word of a DC component indicating the starting position of each small block is fixed, and that, when an end-of-block code is added, a region from the added position to the starting position of the next small block becomes a data region which is ineffective for decoding and reproduction in a currently-used digital VTR, it is possible to record and reproduce a data file other than a video and audio signal of the predetermined format.

Furthermore, data on a recording medium are identical with transmission and record formats of the recording medium. A data file portion is judged as an ineffective data region, and skipped by a reproducing/decoding device of a currently-used digital VTR deck. Therefore, the tape on which a data file is recorded can be seen also on a currently-used digital VTR deck without problems.

Furthermore, the function of a reproducing/decoding device of a currently-used digital VTR deck, and also the above-mentioned function are provided and switched over, thereby enabling both a tape on which a data file is recorded, and that on which recording is conducted by a currently-used digital VTR deck, to be seen without problems.

According to the invention, when recording is performed by a recording apparatus which can record a video and audio signal of a predetermined format and a data file other than the signals, the kind of a data which is recorded at a reproduction position of a recording medium is indicated, and switching is performed by a reproducing apparatus having functions of reproducing/decoding device of a currently-used digital VTR deck, and reproducing and reconstructing a data file, in accordance with the kind of a data which is recorded at a reproduction position of the recording medium, thereby enabling both a tape on which a data file is recorded, and that on which recording is conducted by a currently-used digital VTR deck, to be seen without problems.

According to the invention, when the size of an input data file is not an integer multiple of the size of a region where the data recording is enabled, i.e., a data region which is ineffective for decoding and reproduction in a currently-used digital VTR, or when the input data rate is different from the recording rate of a currently-used deck in spite of conversion and recording conducted so as to maintain the real-timeness, the data file is recorded with adding ineffective dummy data. In a reproducing process, the data file can be reproduced while the added ineffective dummy data are removed away.

According to the invention, a region is set in the same manner as that for recording a data file, and file management information is recorded in data files and data of a currently-used deck to which a concept of a file is given. During a process of reproduction, therefore, the contents of data in a recording medium can be easily known, and a rapid access to the position of contents which are to be seen is enabled.

Moreover, a format which can be handled in the unit of a file and rapidly accessed can be supplied to a VCR of the prior art. An MIC, a management information track, and management information on an HDD are always matched to one other unless writing is particularly performed on a tape by using another PC. At the timing when a tape is mounted, therefore, a file can be immediately accessed by using only management information on the HDD and without reading the management information track.

Typical copy information is separated and recorded. Copy information multiplexed for each sector is once removed away, and a typical value is generated to reduce the number, thereby enabling the recording capacity to be effectively used. During a process of reproduction, it is not required to judge copy information of each sector, and the judgement on whether copying is enabled or not can be performed by seeing only typical copy information. Therefore, no wasteful time is consumed in the judgment during a process of reproduction.

## Claims

1. A recording/reproducing apparatus which records and reproduces a digital video and audio coded signal of a predetermined format on a recording medium in a unit of a predetermined record packet, and in which, in said digital video and audio coded signal, a code word of a DC component of each small block constituting a screen exists at a fixed position in said record packet, wherein
an end-of-block code is added into a region to which a code word of said small block is to be allocated, said end-of-block code indicating an end of said small block, a portion of said region to which the code word of said small block is to be allocated is set as a general-purpose data recording region, said portion being behind said end-of-block code, and an input data is allocated to said general-purpose data recording region.

2. A recording/reproducing apparatus which records and reproduces a digital video and audio coded signal of a predetermined format on a recording medium in a unit of a predetermined record packet, and in which, in said digital video and audio coded signal, a DC component of each small block constituting a screen, class information defining a quantization method of said small block, and motion information relating to a movement of said small block from a previous screen respectively exist at fixed positions in said record packet, wherein
a portion in a region to which a code word of said small block is allocated, said portion being behind an end-of-block code, a region where class information is to be recorded, and a region where motion information is to be recorded are set as a general-purpose data recording region, and an input data is allocated into said general-purpose data recording region.

3. A recording/reproducing apparatus according to claim 1 or 2, wherein said end-of-block code is disposed immediately behind the code word of the DC component of each small block.

4. A recording/reproducing apparatus according to claim 1 or 2, wherein a portion which is behind said end-of-block code of each small block in a predetermined record packet is set as an appendant-information recording area, a portion which is behind said end-of-block code of each small block in remaining record packets is set as a general-purpose data recording region, an input data is recorded in said general-purpose data recording region, and appendant information which is information relating to said data is recorded in said appendant-information recording area.

5. A recording/reproducing apparatus according to claim 1 or 2, wherein appendant information is repeatedly recorded plural times in an appendant-information recording area.

6. A recording/reproducing apparatus according to claim 1 or 2, wherein, when a kind of the input data is a digital video and audio coded signal of a predetermined format, the input data is recorded as it is, and, when the input data is a data other than a digital video and audio coded signal of the predetermined format, the input data is allocated to the general-purpose data recording region.

7. A recording/reproducing apparatus according to claim 6, wherein a data kind code indicative of a kind of the recorded data is recorded at a predetermined position of a track which is a set of a predetermined number of said record packets.

8. A recording/reproducing apparatus according to claim 1 or 2, wherein track data amount information which is information indicating an amount of data which are actually recorded in each track is recorded at a predetermined position of said track.

9. A recording/reproducing apparatus according to claim 1 or 2, wherein recording is performed with making in effective all data in a general-purpose data recording region in a track, and ineffective-track information which is information indicating that all data in said general-purpose data recording region in said track are ineffective is recorded at a predetermined position of said track.

10. A recording/reproducing apparatus according to claim 1 or 2, wherein data which are input as one file are recorded in continuous tracks.

11. A conversion method of converting an input data into a format of a digital video and audio coded signal, in the unit of a predetermined transmission packet, in which a DC component of each small block constituting a screen exists at a fixed position in said transmission packet, wherein
an end-of-block code is added into a region where a code word of a DC component of said small block is to be disposed, a portion of said region where a code word of said small block is to be disposed is set as a general-purpose data disposing region, said portion being behind said end-of-block code, and said data is disposed in said general-purpose data disposing region and converted.

12. A conversion method of converting an input data into a format of a digital video and audio coded signal, in the unit of a predetermined transmission packet, in which a DC component of each small block constituting a screen, class information, and motion information respectively exist at fixed positions in said transmission packet, wherein
a portion of a region where a code word of said small block is to be disposed, said portion being behind said end-of-block code, a region where class information is to be recorded, and a region where motion information is to be recorded are set as a general-purpose data disposing region, and said data is disposed in said general-purpose data disposing region and converted.

13. A conversion method according to claim 11 or 12, wherein said end-of-block code is disposed immediately behind the code word of the DC component of each small block.

14. A conversion method according to claim 11 or 12, wherein an input data is disposed in a general-purpose data recording region of a predetermined record packet, and conversion is performed so that appendant information relating to said data is disposed in a general-purpose data recording area of remaining record packets.

15. A conversion method according to claim 11 or 12, wherein, when a kind of the input data is a digital video and audio coded signal of a predetermined format, the input data is output as it is, and, when the input data is a data other than a digital video and audio coded signal of the predetermined format, the input data is disposed in a general-purpose data recording region and converted.

16. A conversion method according to claim 15, wherein conversion is performed with adding a conversion data kind code indicative of a kind of the input data so as to be disposed at a predetermined position of a track.

17. A conversion method according to claim 11 or 12, wherein conversion is performed with adding track data amount information which is information indicating an amount of data which are actually allocated to each track, so as to be disposed at a predetermined position of said track.

18. A conversion method according to claim 11 or 12, wherein data which are disposed so that all data in a general-purpose data recording region in a track are ineffective are generated, and conversion is performed with adding ineffective-track information which is information indicating that all data in said general-purpose data recording region in said track are ineffective, so as to be disposed at a predetermined position of said track.

19. A conversion method according to claim 11 or 12, wherein conversion is performed so that data which are input as one file are recorded in continuous tracks.

20. A conversion method in which an input signal is a digital video and audio coded signal in the unit of a predetermined record packet and having a format in which a code word of a DC component of a small block constituting a screen exists at a fixed position in said transmission packet, wherein
a portion of a region where a code word of said small block in said input signal is disposed is set as a general-purpose data region, said portion being behind an end-of-block code, and a data is output from said general-purpose data recording region.

21. A conversion method in which an input signal is a digital video and audio coded signal in the unit of a predetermined record packet and having a format in which a code word of a DC component of a small block constituting a screen, copy information, and management information respectively exist at fixed positions in said transmission packet, wherein
a data is output from a portion of a region where a code word of said small block in said input signal is disposed, said portion being behind an end-of-block code, a region where said class information is to be recorded, and a region where said motion information is to be recorded.

22. A conversion method according to claim 20 or 21, wherein a data kind code is detected from a input signal; if said data kind code indicates that a digital video and audio coded signal of a predetermined format is recorded, said input signal is output; and, if said data kind code indicates that a data other than a digital video and audio coded signal of the predetermined format is recorded, said data is output from said general-purpose data region.

23. A conversion method according to claim 20 or 21, wherein track data amount information of each track in said input signal is obtained, and only a data amount indicated by said track data amount information is output from a general-purpose data recording region in each track in said digital video and audio coded signal.

24. A conversion method according to claim 20 or 21, wherein ineffective-track information of each track in said input signal is searched, and an effective data is not output from a general-purpose data recording region in a track in which said ineffective-track information is detected.

25. A recording/reproducing apparatus which records and reproduces a digital video and audio coded signal of a predetermined format in the unit of a predetermined record packet, and
in which, in said digital video and audio coded signal, a code word of a DC component of each small block constituting a screen exists at a fixed position in said record packet, wherein
an end-of-block code is disposed in a region which is in a predetermined track and to which a code word of said small blocks is allocated, a portion of said region to which a code word of the small block is allocated is set as a file management information recording region, said portion being behind said end-of-block code, and file management information which is information relating to a file recorded in a recording medium is allocated into said file management information recording region.

26. A recording/reproducing apparatus which records and reproduces a digital video and audio coded signal of a predetermined format in the unit of a predetermined record packet, and
in which, in said digital video and audio coded signal, a DC component of each small block constituting a screen, class information, and motion information respectively exist at fixed positions in a record packet, wherein
a portion in a region to which a code word of said small block is allocated, said portion being behind an end-of-block code, a region where class information is to be recorded, and a region where motion information is to be recorded are set as a file management information recording region, and file management information is allocated into said file management information recording region.

27. A recording/reproducing apparatus according to claim 25 or 26, wherein said end-of-block code is added immediately behind a code of the DC component of each small block.

28. A recording/reproducing apparatus according to claim 25 or 26, wherein file management information is recorded in continuous tracks.

29. A recording/reproducing apparatus according to claim 25 or 26, wherein file management information is recorded behind a data recorded on a recording medium.

30. A recording/reproducing apparatus according to claim 22 or 23, wherein latest file management information of all files on a recording medium is recorded in a latest file management information region.

31. A recording/reproducing apparatus according to claim 25 or 26, wherein, when a file management information region is to be recorded, a file management information region which already exists on a recording medium is made ineffective.

32. A recording/reproducing apparatus according to claim 25 or 26, wherein, when a data is to be additionally recorded onto a recording medium on which a data and file management information relating to said data are recorded, said data which is to be added is overwritten into a previous file management information region.

33. A recording/reproducing apparatus according to claim 25 or 26, wherein a time and date of updation of each file, file start position information which is information relating to a start position of said file on a recording medium, information relating a file size, and file end position information relating to an end position of said file on said recording medium, or track number information which is information relating to a number of tracks which are used in recording of said file are used as said file management information.

34. A recording/reproducing apparatus according to claim 25 or 26, wherein a file start flag which is information indicating that a start position of a file exists is recorded at a predetermined position of a track where a start position of a file exists.

35. A recording/reproducing apparatus according to claim 25 or 26, wherein a file end flag which is information indicating that an end position of a file exists is recorded at a predetermined position of a track where an end position of a file exists.

36. A recording/reproducing apparatus according to claim 25 or 26, wherein a file ID flag is recorded at a predetermined position of a track where an end position of a file exists, said file ID flag being information for distinguishing said file from another file.

37. A recording/reproducing apparatus according to claim 25 or 26, wherein a file management information track flag which is information indicating a track in a file management information region is set ON in a track of said file management information region.

38. A recording/reproducing apparatus according to claim 25 or 26, wherein an index ID which is information indicating a break of a data is set in a track where a file management information region exists.

39. A recording/reproducing apparatus according to claim 25 or 26, wherein, in deletion of a file management information region, rewriting is performed so as to make ineffective at least a file management information track flag and an index ID.

40. A recording/reproducing apparatus according to claim 25 or 26, wherein file management information existence information which is information for distinguishing whether a file management information region is written in a recording medium or not is recorded.

41. A recording/reproducing apparatus according to claim 25 or 26, wherein file management information existence information is stored on an auxiliary recording medium attached to a case which houses a recording medium.

42. A recording/reproducing apparatus according to claim 25 or 26, wherein file management information region position information is stored on an auxiliary recording medium attached to a case which houses a recording medium, said file management information region position information being information relating to a position of a file management information region on said recording medium.

43. A conversion method of converting an input data into a format of a digital video and audio coded signal, in the unit of a predetermined transmission packet, in which a DC component of each small block constituting a screen exists at a fixed position in said transmission packet, wherein
an end-of-block code is added into a region where a code word of a DC component of said small block is to be disposed, a portion of said region where a code word of said small block is to be disposed is set as a file management information region, said portion being behind said end-of-block code, and file management information relating to said data is disposed in said file management information region and converted.

44. A conversion method of converting an input data into a format of a digital video and audio coded signal, in the unit of a predetermined transmission packet, in which a DC component of each small block constituting a screen, class information, and motion information respectively exist at fixed positions in said transmission packet, wherein
a portion of a region where the code word of said small block is to be disposed, the portion being behind said end-of-block code, a region where class information is to be recorded, and a region where motion information is to be recorded are set as a file management information region, and file management information relating to said data is disposed in said file management information region and converted.

45. A conversion method according to claim 43 or 44, wherein conversion is performed with disposing an end-of-block code immediately behind the code word of the DC component of each small block.

46. A conversion method according to claim 43 or 44, wherein conversion is performed with disposing file management information in continuous tracks.

47. A conversion method in which a digital video and audio coded signal in the unit of a predetermined transmission packet is received, in which a code word of a DC component of each small block constituting a screen exists at a fixed position in said transmission packet, wherein
file management information is output from a portion in a region into which the code word of the small block in said input signal is disposed, said portion being behind an end-of-block code.

48. A conversion method in which a digital video and audio coded signal in the unit of a predetermined transmission packet is received, in which DC components of small blocks constituting a screen, class information, and motion information respectively exist at fixed positions in a record packet, wherein
file management information is output from a portion in a region to which a code word of the small block in said input signal is disposed, said portion being behind an end-of-block code, a region where class information is to be recorded, and a region where motion information is to be recorded.

49. A data recording method wherein, file management information is recorded on another recording medium other than a detachable recording medium recording medium, said file management information being information for managing a file which is to be recorded on said magnetic tape recording medium.

50. A data recording method according to claim 49, wherein said recording medium is a memory and mounted on said magnetic tape recording medium.

51. A data recording method according to claim 49, wherein said recording medium is a hard disk.

52. A data recording method according to claim 49, 50, or 51, wherein said file management information is obtained from a connected external apparatus, and recorded onto said recording medium.

53. A data recording method according to any one of claims 49 to 52, wherein file management information includes at least one of a name of said file, a time and date of recording on said recording medium, a size of said file, a name of a person who performs recording on said tape, copy control information indicating whether recording from said tape to said other recording medium is enabled or not, and a file readout position in said tape.

54. A recording/reproducing method in which; on an individualizing information storage medium added to a detachable recording medium, individualizing information for distinguishing said recording medium from other recording media of a same type is stored; content information which is information relating to data contents on said recording medium is stored in content information storing means; during a process of reproducing said recording medium, said content information of said recording medium identified by said individualizing information is acquired; and data on said recording medium are reproduced on the basis of said acquired content information.

55. A recording/reproducing method in which; on an individualizing information storage medium added to a detachable recording medium, individualizing information for distinguishing said recording medium from other recording media of a same type, and data updation information which is information relating to a time and date of updation of data on said recording medium are stored; content information which is information relating to data contents on said recording medium, and content information updation information which is information relating to a time and date of updation of content information are stored in content information storing means disposed in a recording/reproducing apparatus which can reproduce said recording medium; if, during a process of reproducing said recording medium, the time and date indicated by said content information updation information is identical with or newer than the time and date indicated by said data updation information, said content information of said recording medium identified by said individualizing information storing means is acquired; and data on said recording medium are reproduced on the basis of said acquired content information.

56. A recording/reproducing method in which; on an individualizing information storage medium added to a detachable recording medium, individualizing information which is information for distinguishing said recording medium from other recording media of a same type, and data updation information which is information relating to a data on said recording medium are stored; recording medium content information which is information relating to data contents in said recording medium, and recording medium content information updation information which is information relating to a time and date of updation of content information are stored at a predetermined position on said recording medium; content information which is information relating to data contents in said recording medium, and content information updation information which is information relating to a time and date of updation of content information are stored into content information storing means disposed in a recording/reproducing apparatus which can reproduce said recording medium; if, during a process of reproducing said recording medium, the time and date indicated by said content information updation information is identical with or newer than the time and date indicated by said data updation information, said content information of said recording medium identified by said individualizing information storing means is acquired; if the time and date indicated by said content information updation information is older than the time and date indicated by said data updation information, and the time and date indicated by said recording medium content information updation information is identical with or newer than the time and date indicated by said data updation information, said recording medium content information is acquired, and said content information and updation time and date information are updated on the basis of said recording medium content information; and data in said recording medium are reproduced on the basis of said acquired content information.

57. A recording/reproducing method according to claim 55, 56, or 57, wherein said individualizing information storage medium is a memory and mounted on a magnetic tape recording medium.

58. A recording/reproducing method according to claim 55, 56, or 57, wherein said content information storing means is a hard disk.

59. A recording/reproducing method in which, also when information relating to contents is to be acquired from recording medium content information on a recording medium, and also when information relating to contents is to be acquired from content information on a content information storage medium, information relating to contents is displayed to a user by a common method.

60. A recording/reproducing method according to claim 59, wherein, as information relating to contents of data on a recording medium, information relating to a title, a time and date of updation, and a size of each content is used.

61. A recording/reproducing method according to claim 59, wherein, also when both recording medium content information on a recording medium, and content information on content information storing means do not exist, information relating to contents is generated with setting data on a recording medium as one or plural contents, information relating to contents is displayed to a user by a method which is common to a case where information relating to contents is to be acquired from recording medium content information on a recording medium, and a case where information relating to contents is to be acquired from content information on content information storing means.

62. A data recording method in which copy control information which is added to each sector of input data is separated, typical-copy control information which is information typical of copy control information in a predetermined range of said data is generated by using said copy control information separated from said range, and said typical-copy control information and data from which said copy control information is separated are recorded at predetermined positions of a recording medium, respectively.

63. A data recording method according to claim 62, wherein, by using copy control information added to a sector to be recorded in a unit where error correction is performed in a recording medium or a region of an integer multiple of said unit, typical-copy control information of a sector to be recorded in said region is generated.

64. A data recording method according to claim 62, wherein typical-copy control information is recorded in a predetermined record packet in a recording medium.

65. A data recording method according to claim 62, wherein typical-copy control information is recorded in a predetermined position in a region where management information in a record packet in a recording medium is to be recorded.

66. A data recording method according to claim 2, wherein typical-copy control information is recorded in a predetermined record packet in a unit where error correction is performed in a recording medium.

67. A data transmitting method in which copy control information which is added to each sector of input data is separated, typical-copy control information which is information typical of copy control information in a predetermined range of said data is generated by using said copy control information separated from said range, and said typical-copy control information and data from which said copy control information is separated are transmitted.

68. A data transmitting method according to claim 67, wherein, by using copy control information added to a sector included in a transmission packet unit which is to be transmitted to a transmission path or a region of an integer multiple of said unit, typical-copy control information of a sector included in said region is generated.

69. A data transmitting method according to claim 67, wherein, by using copy control information added to a sector included in a unit where error correction is performed on a transmission path or a region of an integer multiple of said unit, typical-copy control information of a sector included in said region is generated.

70. A data transmitting method according to claim 67, wherein transmission is performed with including typical-copy control information in a predetermined transmission packet.

71. A data transmitting method according to claim 69, wherein typical-copy control information is included in a predetermined position in a region where management information in a transmission packet is to be recorded.

72. A medium which stores a program for realizing a whole or part of means according to any one of claims 1 to 71.
